# FASCICULE DE BREVET EUROPEEN

(11) **EP 3 707 404 B1**
(45) Date de publication et mention de la délivrance du brevet: **17.05.2023**
(21) Numéro de dépôt: 18808444.6
(22) Date de dépôt: 02.11.2018
(51) Int. Cl.: F16D 65/00, B01D 53/04

(54) **DISPOSITIF DE FILTRATION ET UTILISATION DU DISPOSITIF POUR SÉPARER ET COLLECTER LES POUSSIÈRES DE FREINAGE**
FILTRIERVORRICHTUNG UND VERWENDUNG DER VORRICHTUNG ZUM TRENNEN UND SAMMELN VON BREMSSTAUB
FILTRATION DEVICE AND USE OF SAID DEVICE FOR SEPARATING AND COLLECTING BRAKE DUST

(30) Priorité: 06.11.2017 FR 1760377
(43) Date de publication de la demande: 16.09.2020
(73) Titulaire: Sogefi Filtration, 78280 Guyancourt (FR); Tallano Technologie, 92100 Boulogne Billancourt (FR)
(72) Inventeur: ARNAULT, Nicolas, 92370 Chaville (FR); GAUTHE, Grégory, 95530 La Frette Sur Seine (FR)
(74) Mandataire: Plasseraud IP
(86) Numéro de dépôt international: PCT/FR2018/052710
(87) Numéro de publication internationale: WO 2019/086814

(56) Documents cités:
- DE-A1- 4 240 873
- US-A- 3 418 789
- US-A- 3 980 457

## Description

### DOMAINE DE L'INVENTION

La présente invention est relative aux dispositifs de séparation d'éléments polluants générés lors d'un freinage, typiquement par l'action de patins contre un disque rotor tournant autour d'un axe. Le domaine d'application de l'invention concerne en particulier la séparation de poussières et d'eau pour rendre un ensemble de frein non polluant lors du freinage d'un véhicule routier (ex : automobile, poids lourd, motocyclette) ou ferroviaire (train, tramway, métro).

### ARRIERE-PLAN TECHNOLOGIQUE DE L'INVENTION

De manière connue en soi, il existe un besoin de traiter les particules et poussières résultant de l'abrasion des systèmes de freinage à friction. Les particules et poussières peuvent être tout d'abord capturées par aspiration, comme décrit par exemple dans le document DE 42 40 873 C2 ou dans le document FR 3 046 644 et le flux est filtré ensuite contre une paroi/membrane filtrante.

Il est aussi connu, selon le document DE 20 2008 009 717 U1 de capter et retenir les particules et poussières dans le média filtrant, par exemple dont la section est en « U », lequel média filtrant est monté au plus près du support d'étrier.

Ces systèmes ne sont cependant pas particulièrement efficaces à long terme. Lorsque le média filtrant est trop près de la zone de freinage, les températures peuvent avoisiner les 600°C, ce qui limite le choix du média filtrant et réduit les performances de réductions de polluants.

De plus, les particules et poussières capturées forment souvent un mélange disparate, en particulier lorsqu'il y a aussi de l'eau. La saturation en liquide de la membrane filtrante favorise un colmatage précoce par exemple.

Les documents US 3418789 et US 3980457 montrent des dispositifs, pour circuit d'air comprimé, qui se colmatent extrêmement vite s'ils devaient être utilisés pour traiter ce genre de mélange disparate.

Il existe donc un besoin pour des solutions fiables et robustes qui offrent un bon compromis efficacité / adaptation à la complexité des types de particules et poussières à séparer, tout au long de la durée de vie du dispositif de séparation.

### OBJETS DE L'INVENTION

La présente invention a pour but de pallier un ou plusieurs des inconvénients susmentionnés en proposant un dispositif de filtration qui est plus efficace pour séparer de manière adaptée les polluants issus d'un mélange collecté dans la zone de freinage.

A cet effet, l'invention concerne un dispositif de filtration d'après la revendication 1.

Il est ainsi permis de collecter l'eau dans un étage inférieur qui est décalé (plus bas) par rapport à des lignes de courant du flux d'air brut d'admis dans le volume interne du boîtier. L'entrée peut être conçue et agencée pour diriger et optionnellement accélérer le flux d'air admis, éventuellement en étant complétée par des organes de guidage et/ou des parois de déflection, montés intérieurement dans le boîtier. L'ajout, au niveau de l'entrée d'air, de pièces ou reliefs qui créent des réductions de section est avantageux pour accélérer la vitesse du fluide comme dans une technologie cyclonique.

Typiquement, l'étage inférieur correspond à une partie inférieure du boîtier, par exemple une partie inférieure d'un bol du boîtier.

La première unité de séparation peut être superposée à la deuxième unité de séparation, dans le volume interne du boîtier.

Ce type de configuration permet de cumuler trois effets qui se combinent avantageusement dans le dispositif :
- circulation qui peut être rapide pour l'air, qui doit simplement rejoindre une zone d'aval, typiquement centrale, avant de ressortir du boîtier, ce qui limite la perte de charge,
- utilisation de la gravité pour laisser naturellement tomber dans l'étage inférieur les particules et poussières qui circulent/ont circulé du côté amont, typiquement en périphérie, de la première unité de séparation,
- collecte de l'eau déportée du côté du fond pour limiter l'interférence avec la circulation d'air au voisinage de la première unité de séparation, ce qui permet de collecter des gouttelettes d'eau aussi bien pendant les phases d'alimentation du dispositif que dans les phases d'arrêt, le cas échéant en libérant un clapet si de l'eau se situe aussi du côté de la zone d'aval.

Le dispositif de filtration peut être compact, sans recours à des tuyaux intermédiaires entre les unités de séparation. La compacité en hauteur permet de limiter les contraintes quant au débattement nécessaire pour retirer le couvercle du boîtier (par exemple par dévissage) et pour extraire un agencement des moyens de séparation sous la forme d'une cartouche se montant d'un bloc dans le volume interne du boîtier. Cela facilite donc les opérations de maintenance avec rechange de la cartouche.

Selon une particularité, les moyens de séparation sont interconnectés entre eux en superposant la première unité de séparation à la deuxième unité de séparation, de façon à former la cartouche filtrante qui se monte d'un bloc dans le volume interne du boîtier.

Selon une option, la cartouche présente en outre un chapeau de retenue coiffant la deuxième unité de séparation et comportant :
- au moins un premier élément de guidage (dit supérieur), formant de préférence un bord externe généralement annulaire du chapeau de retenue, pour guider radialement vers l'intérieur les particules et poussières tombant depuis la partie de la zone d'amont entourant la première unité de séparation,
- au moins un deuxième élément de guidage (dit inférieur et situé plus bas que le premier élément de guidage), formant de préférence une pente descendante, pour guider radialement vers l'extérieur les particules et poussières ayant été guidées par l'au moins un premier élément de guidage.

De préférence, la zone d'aval s'étend sous un couvercle amovible comprenant la sortie et/ou inclut l'espace intérieur creux délimité de façon annulaire par le média filtrant de la première unité de séparation.

La deuxième unité de séparation définit un cloisonnement dans l'étage inférieur pour permettre d'accumuler l'eau propre dans un compartiment de collecte séparé de l'endroit où s'accumulent les particules et poussières (polluants).

Selon une particularité, il est prévu un fond dans le boîtier qui permet d'évacuer l'eau propre et qui présente une pente facilitant l'écoulement de gouttelettes d'eau de la zone sale vers la zone propre, le compartiment de collecte disposant d'un orifice de purge situé dans un point bas de ce fond. Optionnellement le fond est conique ou partiellement conique pour former une telle pente descendante vers une position centrale correspondant au compartiment de collecte ou à un accès à celui-ci.

Selon une particularité, on prévoit dans l'étage inférieur des moyens magnétiques pour collecter les poussières et particules métalliques (chargées avec un métal ferreux). Les moyens magnétiques peuvent comporter un ou plusieurs bandeaux arqués, formant une face interne concave en regard d'une paroi filtrante de la deuxième unité de séparation. Les moyens magnétiques sont typiquement formés par un ou plusieurs aimants permanents.

Plus généralement, la deuxième unité de séparation comprend un ou plusieurs organes magnétiques qui :
- sont adaptés pour attirer des poussières ;
- forment tout ou partie d'une paroi délimitant intérieurement un réservoir pour piéger/collecter des poussières ; et
- optionnellement sont en regard d'une face externe d'un matériau filtrant, de préférence du feutre ou autre matériau fibreux, perméable à l'eau.

Selon une particularité, le média filtrant est annulaire en s'étendant autour d'un axe longitudinal qui peut correspondre à un axe vertical. Il est typiquement prévu une pré-séparation par une paroi d'un organe pré-séparateur. Cette paroi est généralement tubulaire et disposée dans la zone d'amont, autour de l'unité de séparation.

On comprend que l'organe pré-séparateur, tubulaire ou partiellement tubulaire autour de l'axe longitudinal, peut inclure une pièce perméable au flux d'air chargé en impuretés/particules fines et en eau, qui permet à une partie du flux d'air de circuler entre l'entrée et la face réceptrice (face externe, typiquement) du média filtrant, sans contourner l'organe pré-séparateur par des bords d'extrémités axiaux de l'organe pré-séparateur. A titre d'exemple, la paroi de l'organe pré-séparateur est rigide et ajourée, ce qui rend l'organe pré-séparateur perméable pour permettre une admission de flux d'air suivant des directions centripètes (réparties sur une circonférence de la paroi arquée, cette paroi entourant/recouvrant par l'extérieur (radialement) typiquement plus du tiers de la face externe du média filtrant). L'air peut donc s'écouler de manière centripète, directement depuis une face interne de la paroi de l'organe pré-séparateur jusqu'à la face externe du média filtrant).

Préférentiellement, cette paroi présente des ouvertures définissant des passages étroits et forme un obstacle limitant la circulation centripète, afin de maintenir une distribution adéquate entre un écoulement centripète (subdivisé en lignes de courant discontinues, suivant la répartition des passages étroits) et un écoulement d'air continu suivant des lignes de courant tangentielles, autour de l'unité de séparation et le long d'une paroi du boîtier.

Le système peut être simple et efficace pour séparer les particules liquides (eau). Les lignes de courant pour le gaz sont fortement recourbées et convergent vers l'axe longitudinal suivant une circulation centripète du flux de gaz seulement après une déviation via les passages de l'organe pré-séparateur, ce qui diffère fortement du cheminement des particules/poussières lourdes et des gouttelettes d'eau qui sont déplacées vers l'extérieur sous l'effet de la vitesse d'entrée de l'air admis et la force centrifuge induite. On minimise ainsi les pertes de charge liées à la filtration par la première unité de séparation.

L'élément filtrant peut se présenter optionnellement sous la forme d'une cartouche extractible du boîtier. Le média filtrant annulaire peut être du type papier plissé pour former une surface de média plus importante, de sorte que l'efficacité de filtration et la durée de vie du média peuvent être accrues.

A titre d'option, le média filtrant inclut ou consiste en un bloc annulaire de filtration d'air en papier, qui peut être relativement rigide. Ce média peut s'étendre entre deux flasques moulés (chacun en matière plastique, typiquement sans métal) formant des capuchons d'extrémité.

Préférentiellement, l'entrée du boîtier peut être orientée de façon tangentielle, c'est-à-dire en débouchant selon une direction fuyante par rapport à la zone d'aval et tangentielle/parallèle par rapport à une paroi latérale du boîtier entourant la zone d'amont. Lorsque l'entrée inclut un tronçon de conduit raccordé à la paroi latérale du boîtier, la direction générale de guidage de ce tronçon peut être typiquement horizontale ou inclinée vers le bas ou vers le haut, par exemple perpendiculaire ou à un angle compris entre 70 et 90° par rapport à un axe longitudinal du média filtrant. Un effet d'accélération peut être obtenu lorsque l'inclinaison permet de réduire la section de passage.

Selon une particularité, le média filtrant de l'élément filtrant est perméable à l'eau.

Eventuellement, de l'eau peut s'accumuler dans une zone interne de collecte délimitée par l'élément filtrant (dans un étage dit supérieur du dispositif).

Optionnellement, il est prévu un compartiment de collecte d'eau dans l'étage inférieur, le dispositif de filtration présentant une voie d'évacuation d'eau depuis la zone d'aval vers ce compartiment de collecte.

Selon une particularité, le dispositif de filtration comprend un compartiment de collecte de l'eau séparée situé dans l'étage inférieur. De préférence, le dispositif de filtration comporte aussi des moyens d'évacuation d'eau qui sont adaptés pour faire circuler l'eau sélectivement depuis la zone d'aval vers ce compartiment de collecte et/ou pour évacuer vers l'extérieur du dispositif l'eau séparée accumulée dans ce compartiment de collecte. Ainsi, il est permis d'accumuler de l'eau propre dans un compartiment dédié. De plus, les moyens d'évacuation sont prévus dans une zone placée en arrière (aval) d'un média de filtration, c'est-à-dire une zone propre. On écarte ainsi le risque de blocage de tels moyens d'évacuation par des particules ou poussières solides.

Selon une particularité, les moyens d'évacuation de l'eau sont :
- adaptés pour évacuer l'eau vers le bas, c'est-à-dire selon la direction de la gravité, et
- formés séparément de la sortie pour l'évacuation d'air purifié.

Les moyens d'évacuation d'eau comprennent par exemple :
- un orifice de purge pour vider le compartiment de collecte, et
- un clapet d'obturation, dit premier clapet d'obturation, mobile entre une position de fermeture de l'orifice de purge et une position d'ouverture de l'orifice de purge.

Selon une option de fonctionnement, un tel clapet peut être déplacé automatiquement vers une position de purge lorsqu'il n'y a plus de rotation du disque rotor de l'ensemble de frein. Ce déplacement peut correspondre à un retour vers une position du clapet par défaut, en l'absence d'aspiration par un dispositif collecteur associé au frein ou absence d'un autre type de différentiel de pression permettant la circulation d'air au travers de la première unité de séparation. C'est par exemple le cas à l'arrêt du véhicule ou engin équipé de l'ensemble de frein.

Une dépression, typiquement du côté de la sortie, peut permettre de fermer un clapet ou autre partie mobile des moyens d'évacuation. Un tel clapet (dit deuxième clapet dans l'option selon laquelle un premier clapet est prévu pour purger le compartiment de collecte) permet par exemple d'isoler entre eux :
- le compartiment de collecte, et
- la zone d'aval où l'air filtré circule vers la sortie.

Les moyens d'évacuation d'eau peuvent ainsi comporter un deuxième clapet, apte à faire communiquer entre eux la zone d'aval et le volume interne central entouré par un média filtrant de la deuxième unité de séparation, dans une configuration d'ouverture du deuxième clapet.

Avantageusement, l'écoulement de l'eau est simplement gravitaire dans un état ouvert des moyens d'évacuation d'eau.

Chacun des matériaux pour la filtration peut permettre de laisser passer l'eau. On comprend que les moyens de séparation du dispositif peuvent présenter une configuration avec une sortie placée sur le dessus du média filtrant, à l'opposé de l'étage inférieur, et au moins une paroi d'obstruction et/ou de déflection qui guide l'eau vers le bas. Avec une telle paroi et la position basse du compartiment de collecte, le dispositif permet d'évacuer un trop plein de gouttelettes d'eau dans une zone déportée par rapport au flux principal de circulation de l'air.

Un pré-séparateur peut être interposé entre une paroi latérale du boîtier et la face externe du média filtrant annulaire, afin de limiter le passage d'eau dans le média filtrant de la première unité de séparation.

Selon une particularité, un tel pré-séparateur se combine avantageusement avec un effet cyclone, c'est-à-dire une rotation rapide du flux d'air admis chargé en particules et poussières. En effet, les particules lourdes sont déportées loin de l'axe longitudinal traversant l'espace creux du média filtrant annulaire et peuvent tomber sans besoin de filtration dans l'étage inférieur.

Dans tout ce qui suit, les particules ou poussières lourdes doivent être comprises comme des particules ou poussières de taille relativement importante et tombant vite ainsi sous l'effet de la gravité. Le recours à une accélération tangentielle autour d'un axe sensiblement vertical permet d'exercer une force centrifuge qui contribue à accroître par agglomération la taille des poussières repoussées vers l'extérieur d'une part et à faciliter la retombée par gravité de ces poussières d'autre part, même pendant le fonctionnement du filtre.

Le pré-séparateur peut se présenter sous la forme d'une pièce ou d'un insert formant déflecteur pour les grosses particules de poussières. Parmi les exemples non limitatifs de conception pour ce pré-séparateur, on peut mentionner :
o la présence d'ailettes sur sensiblement la même hauteur que la hauteur du média filtrant de la première unité de séparation (ou bien sur une hauteur supérieure), avec une portion pleine/imperméable à l'air, par exemple sous la forme d'une portion de surface externe lisse en regard de l'entrée d'air,
o la présence de plusieurs ailettes réparties sur au moins deux niveaux de hauteur,
o la présence d'ailettes sur une partie seulement de la hauteur de la pièce ou insert, la partie supérieure pouvant être pleine et typiquement lisse,
o la présence d'au moins une nervure hélicoïdale en saillie radialement vers l'extérieur pour guider les particules et poussières dans le fond du boitier,
o la présence de perforations dans un corps cylindrique, par exemple des perforations circulaires, rectangulaires, oblongues ou toute autre forme limitant les dimensions de la perforation (par exemple moins de 4 ou 5 mm pour la plus grande dimension de l'ouverture).

Optionnellement les ailettes ont une orientation différente d'une orientation tangentielle mais avec une modification d'orientation inférieure à 90° de sorte que chaque bord externe d'une ailette soit décalé vers l'arrière (suivant le sens de circulation tangentielle) par rapport au bord interne de la même ailette. Avec cette disposition des ailettes l'accès par l'extérieur aux passages entre deux ailettes adjacentes est orienté en sens opposé du sens de circulation tangentielle du flux d'air entrant dans le boîtier. Les ailettes délimitent entre elles des fentes étroites de passage, ce grâce à quoi les lignes de courant traversant le pré-séparateur (entre ailettes adjacentes) sont coudées en formant un angle de rebroussement prononcé, l'angle à l'arête de rebroussement ou angle équivalent étant compris par exemple entre 30 et 90°, de préférence entre 45 et 85°.

L'étage inférieur peut former un piège à poussières et est par exemple délimité par une pièce formant un chapeau, ayant une portion typiquement tronconique ou bombée, en s'élargissant radialement vers l'extérieur avec l'éloignement axial par rapport à la première unité de séparation. La portion tronconique présente une ou plusieurs ouvertures et s'étend autour d'un tronçon de conduite central pouvant servir de raccord fluidique, étanche (par rapport à la zone d'amont), entre la zone d'aval et le compartiment de collecte.

Plus généralement, on comprend que le dispositif permet d'évacuer un trop plein de gouttelettes d'eau vers le bas et que l'étage inférieur peut former à la fois un réservoir de poussières, par exemple piégées par des moyens magnétiques, et un compartiment de collecte pour l'eau qui peut être purgée.

Un élément barrière aux poussières peut être prévu dans l'étage inférieur, par exemple pour former une séparation entre le réservoir de poussières et le compartiment de collecte d'eau.

L'élément barrière peut être de forme annulaire et délimite intérieurement un volume interne central de l'étage inférieur.

Selon une option, la deuxième unité de séparation d'eau forme une extrémité inférieure du dispositif de filtration et comprend le compartiment de collecte, le réservoir de collecte de poussières formé dans l'étage inférieur étant séparé du compartiment de collecte par un élément barrière aux poussières qui présente une forme préférentiellement tubulaire. Un élément de filtration additionnel peut compléter l'élément barrière tubulaire, par exemple en étant placé au fond du compartiment de collecte où est formé un passage d'évacuation pour la purge. Un tel élément de filtration additionnel, optionnellement à base de feutre, offre une sécurité : on s'assure que l'on rejette bien de l'eau très propre dans l'environnement.

Le clapet de la soupape de purge est typiquement mobile pour pouvoir occuper une position d'obturation, en particulier lorsqu'il y a une dépression dans l'étage inférieur. Une telle position d'obturation évite de créer des interférences avec le flux circulant vers la sortie, en particulier dans des conditions de fonctionnement sans eau dans le compartiment de collecte.

Dans divers modes de réalisation du dispositif de filtration selon l'invention, on peut éventuellement avoir recours en outre à une ou plusieurs des dispositions suivantes :
- le média filtrant s'étend entre deux flasques moulés formant des capuchons d'extrémité,
- les flasques sont typiquement distincts de l'organe pré-séparateur, un flasque dit inférieur de l'élément filtrant pouvant s'appuyer/reposer directement (axialement) sur la face supérieure d'une base transversale de l'organe pré-séparateur).
- l'entrée débouche intérieurement dans une région de la zone d'amont située ou délimitée (de préférence entièrement située) axialement entre le flasque supérieur et le flasque inférieur.- le compartiment de collecte comprend le volume interne central délimité par l'élément barrière de la deuxième unité de séparation et éventuellement un volume sous-jacent, communiquant avec le volume interne central au travers d'un passage formé dans une paroi de fond du boîtier ou dans un support annulaire de l'élément barrière relié de manière étanche à un bord inférieur de l'élément barrière.
- le média filtrant dans la première unité de séparation est adapté pour retenir des poussières légères, en particulier peu ou pas chargées en métal,
- la première unité de séparation comporte un organe pré-séparateur, situé dans la zone d'amont et entourant le média filtrant, formant un déflecteur annulaire ajouré ou perforé pour être perméable aux poussières légères, la face externe du déflecteur annulaire étant adaptée pour guider vers l'étage inférieur des matières lourdes moins volatiles que les poussières légères, en particulier des poussières lourdes chargées en métal et des gouttelettes liquides.
- l'entrée présente un débouché tangentiel dans le volume interne du boîtier et l'organe pré-séparateur est préférentiellement dépourvu d'ouvertures de passage dans une portion adjacente à l'entrée.
- la face externe du déflecteur annulaire est adaptée (par exemple avec des reliefs allongés suivant une direction circonférentielle) pour un guidage dans une direction tangentielle et forme des arêtes de rebroussement pour des lignes de courant transférant de l'air de la zone d'amont à la zone d'aval.
- la deuxième unité de séparation comprend ou est entourée d'un ou plusieurs organes magnétiques.
- le ou les organes magnétiques sont adaptés pour attirer des poussières et des particules afin de les retenir plus bas que l'entrée et, de préférence, plus bas que la première unité de séparation.
- le ou les organes magnétiques forment tout ou partie d'une paroi délimitant intérieurement un réservoir de collecte de poussières.
- le ou les organes magnétiques sont en regard d'une face externe d'un matériau filtrant, de préférence du feutre, perméable à l'eau.
- la première unité de séparation comprend un média filtrant de filtration d'air, comportant du papier.
- la deuxième unité de séparation présente un matériau filtrant fibreux perméable à l'eau, le papier pour la filtration d'air étant de préférence plus rigide que le matériau fibreux.
- dans une option, la première unité de séparation et la deuxième unité de séparation partagent en commun un même élément filtrant, qui s'étend par exemple autour du compartiment de collecte pour l'eau et autour de la zone d'aval.
- le deuxième clapet est monté dans une ouverture centrale inférieure de la première unité de séparation.
- les moyens de séparation comprennent un chapeau de retenue coiffant la deuxième unité de séparation et formant une interface entre une partie annulaire de la zone d'amont entourant la première unité de séparation et l'étage inférieur.
- le chapeau de retenue présente un bord annulaire externe distal par rapport à un axe central du média filtrant, le bord annulaire externe étant de préférence proche ou en prise avec une paroi externe latérale du boîtier, et une partie centrale délimitant une ouverture axiale et adaptée pour se fixer à au moins l'un parmi la première unité de séparation et la deuxième unité de séparation.
- une ou plusieurs ouvertures sont prévues entre la partie centrale et le bord annulaire externe, le chapeau de retenue ayant une face supérieure inclinée de façon descendante vers la ou les ouvertures s'étendant depuis la partie centrale.
- le chapeau de retenue présente une portion radiale, de préférence tronconique, formant la face supérieure inclinée et qui s'étend de façon intermédiaire entre le bord annulaire externe et la partie centrale.
- un réservoir pour piéger des particules et des poussières de freinage est délimité (dans l'étage inférieur) entre la portion radiale du chapeau de retenue et une paroi de fond du boîtier, cette paroi de fond étant préférentiellement inclinée vers un point bas central de l'étage inférieur.
- le ou les organes magnétiques sont adjacents à une paroi de fond du boîtier et/ou accolés à une paroi latérale du boîtier délimitant un volume interne au boîtier dans lequel sont entièrement logés les moyens de séparation.

Il est également proposé un ensemble de frein d'après la revendication 14, qui est non polluant en ce qu'il supprime pour l'essentiel l'émission dans l'atmosphère de particules ou poussières.

Plus particulièrement, l'ensemble de frein, avantageusement non polluant, comprend :
- le dispositif de filtration,
- un support d'étrier,
- un disque rotor tournant autour d'un axe,
- au moins deux patins mobiles destinés à venir en appui sur le disque rotor pour le freiner sous une force de serrage fournie par un étrier, les patins comprenant du matériau de friction susceptible de relâcher des particules résultant de l'abrasion,
- un dispositif collecteur agencé au moins en partie à proximité du support d'étrier, le dispositif collecteur comprenant :
   - au moins une entrée, et
   - un élément de liaison, raccordé une sortie du dispositif collecteur et en communication avec l'entrée du dispositif de filtration.

Selon une particularité, le dispositif collecteur présente des moyens d'aspiration agencés au moins en partie à proximité du support d'étrier, de façon à ce que chaque entrée du dispositif collecteur soit définie par une zone d'aspiration formée au voisinage de chaque patin et délimitée par un déflecteur.

Il est également proposé selon l'invention une utilisation du dispositif de filtration d'après la revendication 16 dans un véhicule ou engin roulant, selon laquelle l'entrée formée par le boîtier définit une canule sur laquelle est fixé un élément de liaison, de préférence un tuyau souple, pour la liaison avec un dispositif collecteur de poussières de freinage, le boîtier du dispositif de filtration étant attaché par des moyens de fixation à une jambe d'un amortisseur de suspension.

Il est aussi proposé selon l'invention une utilisation du dispositif de filtration d'après la revendication 17 dans un véhicule ou engin roulant, selon laquelle l'étage inférieur du dispositif de filtration sert à conserver des particules et des poussières de freinage autour de la deuxième unité de séparation et sous un chapeau de retenue inséré dans le boîtier (de préférence inséré sous la première unité de séparation).

Il est aussi proposé selon l'invention une utilisation du dispositif de filtration d'après la revendication 18 dans un véhicule ou engin roulant générant des particules et des poussières de freinage, selon laquelle un ou plusieurs organes magnétiques sont prévus dans l'étage inférieur pour attirer et conserver des particules et des poussières de freinage dans l'étage inférieur.

L'attraction magnétique limite le risque que les poussières, en particulier les poussières lourdes chargées en métaux, remontent (par exemple en cas d'à-coup) au même niveau de hauteur que la première unité de séparation.

### BREVE DESCRIPTION DES DESSINS

D'autres caractéristiques et avantages de l'invention apparaîtront au cours de la description suivante de plusieurs modes de réalisation, donnés à titre d'exemples non limitatifs, en regard des dessins joints dans lesquels :
- la figure 1 est une vue en coupe longitudinale d'un dispositif de filtration selon un mode de réalisation conforme à l'invention ;
- la figure 2 montre la première unité de séparation d'un filtre conforme à l'invention, ici avec une pièce de guidage du flux d'air admis dans le filtre et un organe pré-séparateur ayant une portion pleine prévue en vis-à-vis de la pièce de guidage ;
- la figure 3 illustre une coupe, dans une vue en perspective, de la première unité de séparation de la figure 2 ;
- la figure 4 est une vue en perspective d'un bol formant un composant de boîtier du filtre de la figure 1 ;
- la figure 5 montre une pièce formant un chapeau de retenue, apte à délimiter un étage inférieur dans le boitier où sont piégées les poussières ;
- la figure 6 est une vue en coupe verticale illustrant notamment la deuxième unité de séparation et son intégration sous la première unité de séparation, dans une position coaxiale par rapport à un agencement annulaire périphérique d'organes magnétiques ;
- la figure 7 illustre un exemple d'utilisation du dispositif de filtration de la figure 1, dans un ensemble de frein ayant une fonction d'aspiration de poussières de freinage.

### DESCRIPTION DES MODES DE REALISATION PREFERES DE L'INVENTION

Sur les différentes figures, des références identiques indiquent des éléments identiques ou similaires.

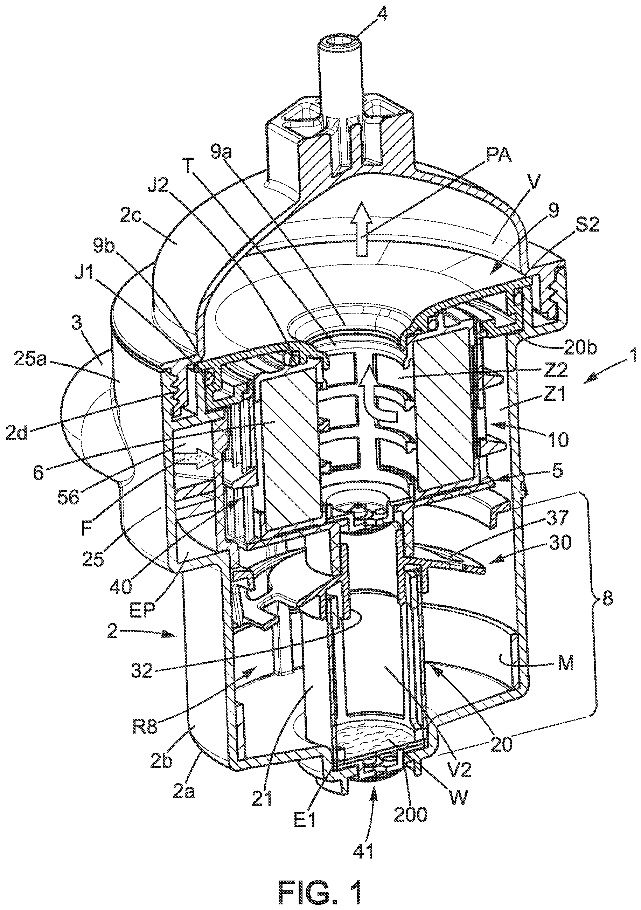

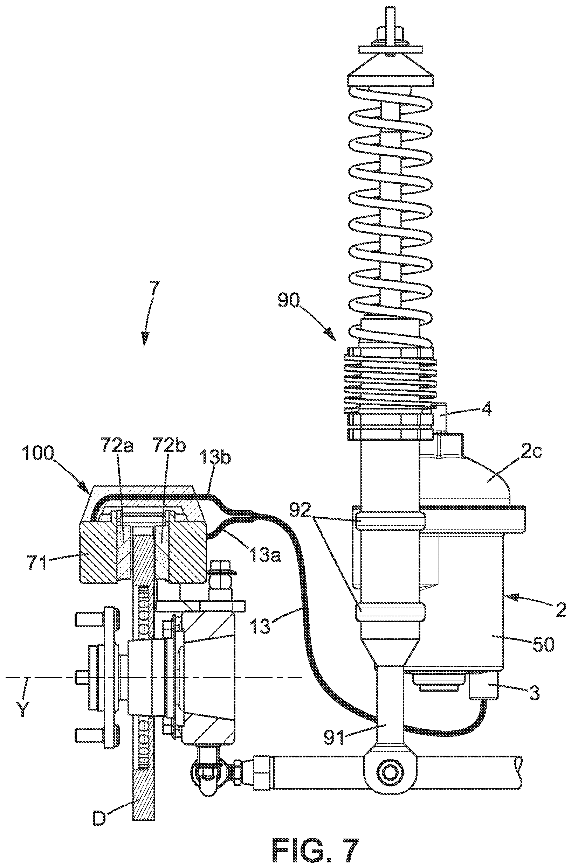

En référence aux figures 1 et 7, le dispositif 1 de filtration est prévu pour séparer et collecter des particules et poussières produites par des patins 72a, 72b d'un ensemble de frein 7. Le dispositif ou filtre 1 comprend un boîtier 2 qui présente une paroi supérieure et une paroi inférieure.

Comme bien visible sur la figure 7, le boîtier 2 est raccordable de façon interchangeable à une ou éventuellement plusieurs conduites d'un circuit d'alimentation en air chargé de poussières de freinage. Ce circuit est raccordé à un dispositif collecteur 100 appartenant à un ensemble de frein 7. Ici, le dispositif collecteur 100 présente des moyens d'aspiration agencés au moins en partie à proximité du support d'étrier 71 associé au disque rotor D, de façon à ce que chaque entrée du dispositif collecteur 100 soit définie par une zone d'aspiration formée au voisinage de chaque patin 72a, 72b qui s'engage contre le disque rotor D. L'entrée du dispositif collecteur 100 peut être délimitée par un déflecteur, par exemple comme décrit dans le document FR 3 046 644.

Une entrée 3 formée par le boîtier 2 peut définir une canule C3 sur laquelle est fixé un élément de liaison 13, ici un tuyau souple, pour la liaison au dispositif collecteur 100. Le tuyau se dédouble optionnellement avec deux branches 13a, 13b pour permettre de collecter les poussières provenant des zones de friction associées respectivement aux deux patins 72a, 72b.

Le boîtier 2 peut être rendu solidaire d'un composant installé en partie basse du véhicule ou engin roulant équipé de l'ensemble de frein 7. Dans l'exemple illustré, le boîtier 2 est attaché, grâce à des moyens de fixation 92 (éventuellement avec le recours un vissage/boulonnage), à une jambe 91 d'un amortisseur de suspension 90.

Comme illustré sur la vue en coupe longitudinale de la figure 1, le boîtier 2 comprend une paroi externe latérale 2b qui s'étend depuis la paroi de fond 2a jusqu'à la paroi supérieure du boîtier 2. La paroi de fond 2a forme une extrémité inférieure E1 avec une ouverture 200 permettant une purge d'eau par écoulement gravitaire.

Le boîtier 2 du filtre 1 peut présenter une forme sensiblement tubulaire autour d'un axe central. Dans l'exemple non limitatif des figures, la paroi de fond 2a du boîtier 2 est définie par ou fait partie d'un bol 50 typiquement en métal ou en plastique. Ce bol 50 peut optionnellement former une partie stationnaire dans l'exemple représenté.

Le reste du boîtier 2 est fixé de manière amovible par rapport à ce bol 50 pour obturer de façon étanche l'ouverture 50b du bol 50. La paroi supérieure est formée ici par un couvercle 2c, qui est relié de manière étanche au bol 50, ici par vissage. Un filetage mâle peut être prévu sur le couvercle 2c pour s'engager avec le filetage femelle 2d formé dans une extrémité supérieure de la paroi latérale 2b. Une ouverture supérieure est formée dans ce couvercle 2c par une canule. Plus généralement, on peut voir que le boîtier 2 présente une sortie 4 qui peut être située à l'opposé de la paroi de fond 2a. L'exemple illustré de la figure 1 avec une canule centrale pour former cette sortie 4 est seulement donné à titre d'exemple non limitatif.

Dans des options de réalisation, le couvercle 2c peut présenter une forme aplatie plutôt qu'une forme de dôme. Par ailleurs, la sortie 4 peut correspondre à une ouverture qui peut directement former un passage intérieur d'une turbine. A titre d'exemple, le bol 50 ou composant de boîtier similaire peut être fermé par une turbine électrique.

Le boîtier 2 peut former ou être raccordé à un étage de séparation d'eau, de préférence sous la forme d'un étage inférieur 8. L'étage de séparation d'eau peut être déporté vers le bas par rapport à une zone intérieure du boîtier placée au même niveau que l'entrée 3. Un étage de filtration d'air peut être défini dans cette zone intérieure qui est typiquement au moins dans la partie haute du boîtier 2, à distance de la paroi de fond 2a.

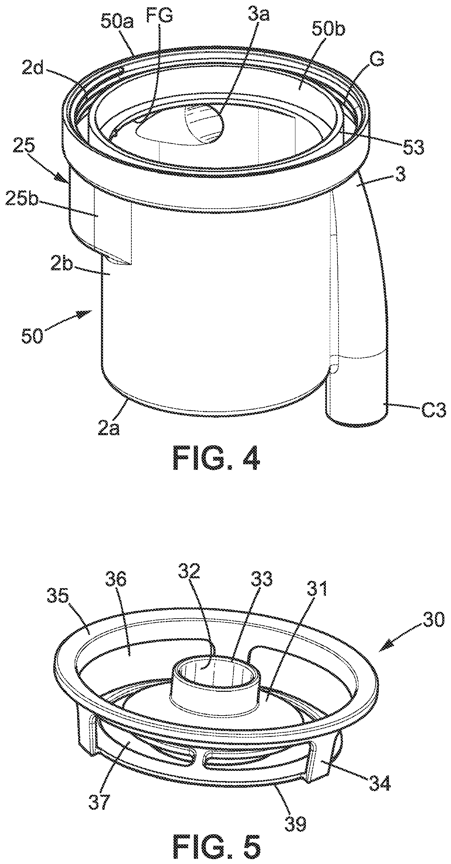

En référence aux figures 1 et 4, le couvercle 2c peut présenter la sortie 4, tandis que l'entrée 3 est formée sur le bol 50 ou sur une paroi latérale 2b du boîtier 2. La figure 4 montre le cas d'un bol 50 réalisé d'une pièce qui inclut la paroi de fond 2a, à partir de laquelle s'étend vers le haut la paroi latérale 2b annulaire.

Le bol 50 délimite notamment un réservoir R8 de poussières et dispose en outre d'un compartiment de collecte CC où de l'eau W peut s'accumuler, à condition d'obturer de façon étanche l'ouverture 200. Ce compartiment de collecte CC et le réservoir R8 sont présents du côté de l'étage inférieur 8 (étage de séparation d'eau). La hauteur du bol 50 est par exemple supérieure à 50 ou 60 mm et de préférence dépasse la hauteur du couvercle 2c. L'étage de séparation d'eau peut présenter une hauteur au moins égale à 25 ou 30 mm, et typiquement intégré dans le bol 50.

Le bol 50 définit aussi dans cet exemple tout ou partie d'une chambre pour loger l'élément filtrant 5 d'une première unité de séparation 10, visible sur les figures 1, 2 et 3. La chambre pour l'élément filtrant 5 est axialement distante de la paroi de fond 2a.

L'extrémité supérieure 50a du bol 50 est annulaire. Un tel bol 50 peut être préhensible d'une main, le diamètre externe ou dimension équivalente de la paroi latérale 2b étant typiquement inférieure à 15 cm. Optionnellement, le couvercle 2c peut s'étendre essentiellement au-dessus de l'élément filtrant 5.

Dans ce cas, la paroi latérale 2b du boîtier 2 est formée seulement par le bol 50. Selon une autre option, on peut aussi prévoir un composant de boîtier intermédiaire (non représenté) qui s'étend autour de l'axe central entre des extrémités axiales ouvertes, respectivement supérieure et inférieure, le composant de boîtier ayant une paroi latérale généralement cylindrique ou autre forme adaptée qui définit tout ou partie de la chambre pour loger l'élément filtrant 5. Dans ce cas, le couvercle 2c est fixé à l'extrémité supérieure du composant de boîtier intermédiaire, tandis que le bol ou cuve/fond similaire vient se fixer sur l'extrémité inférieure du composant intermédiaire. Le composant de boîtier intermédiaire forme alors un adaptateur de connexion entre le bol et le couvercle 2c.

On préfère utiliser un couvercle 2c qui se fixe de façon amovible, de façon à pouvoir remplacer au moins l'élément filtrant 5.

Par ailleurs, il est prévu de placer dans le boîtier 2 un élément de cloisonnement 9, ici apte à s'engager de façon étanche contre le dessus de la paroi latérale 2b, typiquement par l'intermédiaire d'un joint annulaire J1. Une gorge G, visible sur la figure 4, peut être formée dans l'extrémité supérieure 50a. La zone de vissage par utilisation du filetage femelle 2d peut alors s'étendre dans cette gorge G, tandis que le joint J1 vient s'appuyer radialement contre une projection annulaire 53 délimitant le côté intérieur de la gorge G.

L'élément de cloisonnement 9 a une forme typiquement plate et annulaire, avec une ouverture de passage 9a. L'ouverture de passage 9a, ici centrale/centrée sur l'axe du boîtier 2 et l'axe longitudinal X du média filtrant 6 de l'élément filtrant 5, permet une communication entre la sortie 4 et un espace intérieur creux 6c de l'élément filtrant 5. L'élément de cloisonnement 9 est maintenu axialement en position, entre deux zones de butée opposées 9b, 20b formant chacune un appui typiquement annulaire. Une première zone de butée axiale 9b, de forme annulaire, est formée par un contact contre le couvercle 2c, ici contre une section radiale S2 proche de la partie filetée du couvercle 2C. Cette section radiale S2 est axialement en regard d'un rebord interne de la paroi latérale 2b qui forme la zone de butée axiale 20b pour soutenir par le bas l'élément de cloisonnement 9.

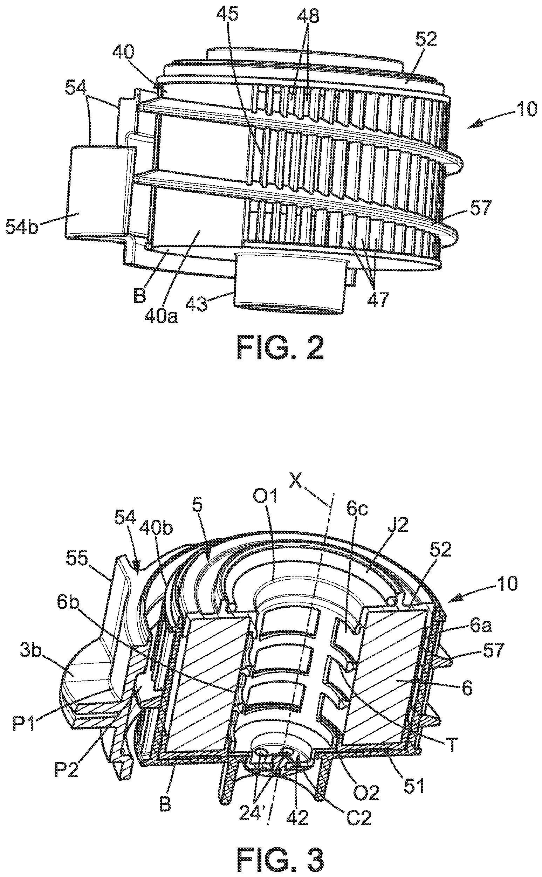

L'élément filtrant 5 (formant un insert filtrant) présente, comme bien visible sur les figures 1 et 3, un média filtrant 6, un premier flasque appelé dans ce qui suit flasque inférieur 51, un deuxième flasque appelé dans ce qui suit flasque supérieur 52, et un composant longitudinal T interne qui s'étend entre le flasque inférieur 51 et le flasque supérieur 52. Le composant longitudinal T, ici sous la forme d'un tube ajouré, peut rigidifier l'élément filtrant 5. Le média filtrant 6 s'étend de préférence autour de son axe longitudinal X qui peut correspondre à un axe central pour le dispositif de filtration 1.

Le média filtrant 6, par exemple en papier ou matériau similaire, est adapté pour la filtration d'air. Ce média filtrant 6 peut être plissé en étoile pour augmenter la superficie de sa face externe 6a et faciliter une filtration vis-à-vis de particules fines.

Dans le boîtier 2, l'élément filtrant 5 forme un insert reçu dans le creux d'une paroi annulaire d'un organe pré-séparateur 40, laquelle paroi annulaire forme un élément déflecteur 45. L'organe pré-séparateur 40 est préférentiellement rigide et forme une enveloppe latérale, à la façon d'un manchon, autour de la face externe 6a du média filtrant 6. L'organe pré-séparateur 40 et l'élément filtrant 5 forment une première unité de séparation 10 logée dans le boîtier 2. Cette première unité de séparation 10 est montée immédiatement sous l'élément de cloisonnement 9 dans l'exemple non limitatif de la figure 1.

Le média filtrant 6, annulaire, présente une face externe 6a maintenue espacée de la paroi annulaire 45 et une face interne 6b en contact avec l'élément structurel allongé T, par exemple seulement au niveau de nervures externes de cet élément T.

Deux ouvertures opposées O1, O2 sont prévues respectivement dans le flasque supérieur 52 et dans le flasque inférieur 51. L'espace intérieur creux 6c, délimité par la face interne 6b, forme une zone d'aval Z2 par rapport à la filtration permise selon un sens centripète. Un bord interne annulaire de l'élément de cloisonnement 9 est situé à proximité du débouché supérieur de l'espace intérieur creux 6c, de sorte que l'ouverture O1 et l'ouverture 9a sont alignées axialement et quasiment confondues pour permettre à de l'air filtré par l'élément filtrant 5 de circuler de façon ascendante et d'être évacué du dispositif 1 via la sortie 4 située plus haut que l'élément de cloisonnement 9. La section de la sortie 4 peut être très inférieure à la section de l'ouverture O1.

Une superposition de l'élément de cloisonnement 9 et du flasque supérieur 52, avec l'utilisation d'un joint annulaire intermédiaire J2 et l'utilisation du joint J1, permet de séparer de façon étanche la zone d'aval Z2 de la partie de la zone d'amont Z1 formée en périphérie du média filtrant 6 (du côté de la face externe 6a). Ces joints J1 et J2 peuvent être compressés radialement et/ou axialement. Bien entendu, d'autres configurations peuvent être utilisées, par exemple pour limiter le nombre de joints ou éventuellement pour intégrer dans le flasque supérieur 52 un organe d'étanchéité contre la paroi latérale 2b et un moyen d'engagement en butée sous le couvercle 2c.

Le recours à un élément de cloisonnement 9 distinct du flasque supérieur 52 peut être avantageux pour le montage et le maintien d'un ou plusieurs organes de guidage et/ou des parois de déflection, montés intérieurement dans le boîtier 2 à la périphérie de la première unité de séparation 10. Plus généralement, il peut être ajouté, au niveau d'un débouché 3a tangentiel de l'entrée 3 d'air chargé en poussières F, des pièces de guidage 54 ou des reliefs qui créent des réductions de section. Ceci permet d'accélérer la vitesse du fluide et de former des lignes de courant tangentielles à la paroi latérale externe 2b comme dans une technologie cyclonique.

De plus, le débouché tangentiel 3a est seulement illustré à titre d'option, ici pour former un débouché adapté dans la paroi latérale 2b. Dans des variantes on peut prévoit un débouché sensiblement radial ou un débouché différent, associé à un déflecteur pour dévier le flux d'air contre une ou plusieurs parois externes contre lesquelles les particules solides les plus lourde et les gouttelettes d'eau peuvent tomber plus ou moins progressivement. Par exemple le débouché peut être en regard d'un déflecteur approprié pour dévier à environ 90° le flux, afin de permettre une circulation tangentielle le long d'une paroi externe en regard de la première unité de séparation 10.

Dans le cas non limitatif des figures 1 à 3, on peut voir un agencement avec une ou plusieurs pièces de guidage 54 placées dans une excroissance 25 (excroissance vers l'extérieur) de la paroi latérale 2b.

L'excroissance 25, visible sur la figure 4, est formée dans une partie supérieure de la paroi latérale 2b, par exemple dans un secteur angulaire de l'ordre de 90°, 120° ou 180° par rapport à l'axe du dispositif 1 (c'est-à-dire sur un quart, un tiers ou la moitié de la circonférence de la partie supérieure de la paroi latérale 2b). La partie inférieure de la paroi latérale 2b peut être plus régulière, par exemple avec une circonférence circulaire. Le débouché intérieur 3a de l'entrée 3 est formé à une première extrémité 25a de cette excroissance 25, ici sous une paroi annulaire FG formant le fond de la gorge G. L'excroissance 25 permet de former un canal de guidage 56 déporté vers l'extérieur, avec une moindre courbure qu'un passage longeant au ras l'organe pré-séparateur 40.

Une pièce de guidage 54 peut présenter une nervure externe 55 parallèle à l'axe longitudinal X du média filtrant 6. Cette nervure 55 forme un obstacle dans l'espace annulaire autour de la première unité de séparation, ce qui évite à des particules/poussières ayant déjà fait un tour dans la zone d'amont Z1 de continuer de tourner autour de la première unité de séparation 10. Ainsi, de telles particules/poussières rencontrant cette nervure 55 ne peuvent pas se mélanger au flux entrant par le débouché 3a.

En référence à l'exemple non limitatif de la figure 3, la ou les pièces de guidage 54 peuvent délimiter deux passages : un passage extérieur P1 correspondant à un canal de guidage 56 pour l'air sortant du débouché 3a, situé radialement à l'extérieur des pièces de guidage 54, et un passage intérieur P2 au ras de la face externe de l'organe pré-séparateur 40, du côté intérieur et parallèle au passage extérieur P1. Le passage intérieur P2, sert à faire circuler de façon tangentielle des particules ayant déjà fait au moins un tour autour de l'organe pré-séparateur 40 de la première unité de séparation 10.

Un relief radial externe et/ou une pièce additionnelle, formant ici une pente 3b légèrement ascendante, permettent d'accélérer la vitesse de circulation dans le canal 56. Sous cette pente 3b, il peut être prévu une paroi d'obstruction ayant un rôle d'obstacle similaire au rôle de la nervure 55, afin de faire chuter des particules plus bas. Une extension de guidage 54b peut être formée sous une zone terminale plus étroite du canal de guidage 56. Cette extension de guidage a par exemple une section en L inversé selon une coupe longitudinale passant par l'axe central du dispositif 1. Le dessus de cette extension de guidage 54b forme l'extrémité libre de la pente 3b.

La deuxième extrémité 25b est au même niveau de hauteur que la première extrémité 25a, sous la paroi annulaire FG (paroi formant ici le fond de la gorge G). On comprend que le flux d'air est canalisé entre trois éléments : la paroi annulaire FG, la face interne de la paroi latérale 2b, l'épaulement EP délimitant le bas de l'excroissance. La ou les pièces de guidage 54 peuvent être disposées en appui sur l'épaulement EP et en prise avec la bordure interne de la paroi annulaire FG pour délimiter, avec les trois éléments précités, le canal de guidage 56, bien visible sur la figure 1. Avec ce guidage dans le canal de guidage 56, on génère des lignes de courant tangentielles autour de l'organe pré-séparateur 40 qui forme la face externe de la première unité de séparation 10.

L'admission tangentielle de l'air F et l'accélération provoquée par des réductions de section dans la zone périphérique à la première unité de séparation 10, contribuent à pousser, par la force centrifuge, les particules et poussières vers l'extérieur, contre la paroi latérale 2b du boîtier 2. Cet effet permet de faire tomber les particules situées le plus à la périphérie du flux de circulation tangentielle dans la zone d'amont Z1, ces particules étant en pratique les particules les plus lourdes.

L'organe pré-séparateur 40 peut optionnellement inclure une ou plusieurs nervures hélicoïdales 57 qui descendent progressivement, en favorisant ainsi une descente des particules et poussières plus bas que le niveau de hauteur de l'excroissance 25. Plus généralement ce type de guidage descendant (suivant une descente progressive, qui requiert typiquement un tour autour du média filtrant 6), par la face externe de la première unité de séparation 10, peut être une option avantageuse lorsque l'air à filtrer admis dans le boîtier 2 est d'abord canalisé dans un canal de circulation tangentielle avant d'être filtré de façon centripète.

De manière générale, on peut prévoir un organe pré-séparateur 40 ayant des reliefs saillants vers l'extérieur (par exemple les nervures 57) qui s'opposent à une descente verticale directe du flux d'air longeant la face externe de l'organe pré-séparateur 40, en accroissant ainsi la longueur de parcours/trajectoire de lignes de courant le long de régions ajourées de la paroi annulaire formant le déflecteur 45.

L'organe pré-séparateur 40 peut présenter une portion de paroi 40a qui est pleine à proximité de la deuxième extrémité 25b, où débouche le canal de guidage 56. L'extension longitudinale 54b, lorsqu'elle est présente, est en regard de cette portion de paroi 40a.

Dans cette option de réalisation, il n'est alors pas permis de créer des lignes de courant à composante centripète avant de dépasser une longueur seuil de trajet tangentiel. Une telle longueur seuil permet une accélération significative du flux d'air tournant autour de l'organe pré-séparateur 40.

En référence à la figure 2, l'organe pré-séparateur 40 peut présenter de nombreux passages d'accès 48 à la face externe 6a du média filtrant 6, ici en dehors de la portion de paroi 40a. Les passages d'accès 48 sont étroits suivant la direction de circulation et peuvent être éventuellement allongés dans la direction verticale ou direction similaire parallèle à l'axe longitudinal X du média filtrant 6.

L'organe pré-séparateur 40 délimite un volume de réception où l'élément filtrant 5 peut être logé de façon coaxiale à un tube inférieur 43 formé intégralement avec une base B annulaire de l'organe pré-séparateur 40. Une seule pièce rigide forme ici l'organe pré-séparateur 40 mais une conception en plusieurs parties assemblées peut être prévue. Un élément déflecteur 45, formé par la paroi latérale annulaire de cet organe pré-séparateur 40, s'étend vers le haut depuis la base B.

Comme visible sur les figures 1 et 3, le flasque inférieur 51 de l'élément filtrant 5 peut reposer directement sur la face supérieure de la base B. Afin de minimiser l'écartement radial entre la face externe 6a et la paroi latérale 2b du boîtier 2, les flasques inférieur et supérieur 51, 52 peuvent être en contact radial contre la face interne de l'élément déflecteur 45. Ces flasques 51, 52 recouvrent ici de manière ajustée les faces axiales opposées du média filtrant 6. Le déflecteur annulaire 45 est ajouré ou perforé pour former les passages d'accès 48, de façon à être perméable aux poussières légères.

La face externe du déflecteur annulaire 45 peut être adaptée pour guider vers un étage inférieur 8 des matières lourdes moins volatiles que les poussières légères. Ici, les nervures hélicoïdales 57, préférentiellement continues et formées d'une pièce avec la paroi latérale de l'organe pré-séparateur 40, permettent un tel guidage descendant, avantageusement progressif.

Les matières lourdes incluent en particulier des poussières lourdes chargées en métal et des gouttelettes liquides. L'accélération dans le canal de guidage 56 ou dans une zone analogue d'admission du flux d'air F permet de venir projeter et maintenir (par force centrifuge) ces matières contre la paroi externe délimitant la zone d'amont Z1, c'est-à-dire la face interne de la paroi latérale 2c dans l'exemple illustré sur la figure 1.

Le média filtrant 6 est adapté pour retenir les poussières légères, en particulier peu ou pas chargées en métal, moins sensibles à l'effet centrifuge. En référence à la figure 2, de telles poussières légères peuvent passer entre deux ailettes 47 radiales ayant chacune une orientation modifiée de la même façon par rapport à la direction radiale.

Ces ailettes 47 peuvent être planes mais orientées avec un angle de 5 à 45°, de préférence 10 à 40° par rapport à une direction radiale passant par l'axe longitudinal X. ce décalage angulaire est positif, suivant le sens de circulation périphérique autour de la première unité de séparation 10, de sorte que la déviation nécessaire pour passer d'un direction tangentielle à une direction d'entrée dans l'unité 10, entre deux ailettes 47 successives, n'est pas de 90° mais d'un angle supérieur à 90° (compris entre 95 et 135°, de préférence compris entre 100 et 130°).

La présence d'ailettes 47 sur sensiblement la même hauteur que la hauteur du média filtrant 6, avec une portion pleine 40a/imperméable à l'air, est un exemple non limitatif de conception de l'organe pré-séparateur 40. On peut aussi prévoir plusieurs ailettes 47 réparties sur au moins deux niveaux de hauteur, ou bien s'étendant seulement sur une partie inférieure de la hauteur (du côté de la base B mais sans aucun passage latéral à proximité du bord supérieur 40b). Dans cette variante (non représentée), la partie supérieure annulaire de l'élément déflecteur 45 peut être pleine (typiquement lisse). Autrement dit, on remplace la portion 40a formant une bande pleine d'extension verticale par une bande pleine annulaire.

Alternativement, on peut prévoir d'autres façons de définir des passages d'accès 48 étroits, par exemple par des perforations réparties de façon annulaire sur tout ou partie de la circonférence de l'élément déflecteur 45.

Par ailleurs, on peut supprimer la ou les nervures hélicoïdales 57. Eventuellement, des reliefs similaire peuvent être formés/rapportés sur la face interne de la paroi latérale 2c du couvercle 2.

En référence à présent aux figures 1, 5 et 6, on décrit l'intégration de la deuxième unité de séparation 20 et le traitement des particules et gouttelettes d'eau qui tombent dans l'étage inférieur 8, plus bas que la première unité de séparation 10.

La zone d'amont Z1, typiquement annulaire et formée le long de la paroi latérale 2c, se subdivise en une première partie ou sous-zone entourant le média filtrant 6 de la première unité de séparation 10 et une deuxième partie ou sous-zone située plus bas, dans l'étage inférieur 8. Tandis que la première sous-zone forme un circuit de circulation hélicoïdale des particules et des poussières les plus lourdes, avec optionnellement certaines zones de chute plus rapide vers le bas (par exemple le long de la nervure 55), la deuxième sous-zone peut être au moins en partie abritée des lignes tournante de courant, pour ce qui concerne le réservoir R8 formé sous un chapeau de retenue 30.

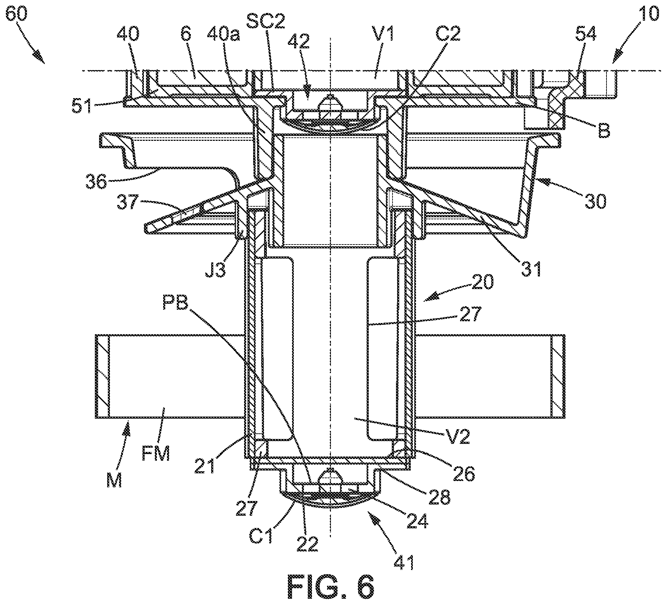

En référence aux figures 1 et 6, le chapeau de retenue 30 peut être une pièce intermédiaire placée entre le tube inférieur 43 formant l'extrémité basse de la première unité de séparation 10 et le dessus d'une deuxième unité de séparation 20. Plus généralement, on prévoit sous la base B une pièce ou une portion de retenue qui limite la remontée verticale (en cas d'à-coup) de poussières tombées dans un étage inférieur 8 situé du côté de la paroi de fond 2a du boîtier 2.

La deuxième unité de séparation 20 comprend un compartiment de collecte CC où de l'eau W peut soit s'accumuler, soit être purgée. Ce compartiment de collecte CC peut être au moins en partie interne au boîtier 2 ou est raccordé de façon étanche au volume intérieur V via une conduite débouchant du côté de la paroi de fond 2a.

Dans l'exemple illustré, c'est l'étage inférieur 8, interne au boîtier 2, qui forme le réservoir R8 pour piéger les particules et poussières tombées. Ce réservoir R8 s'étend, de préférence de façon annulaire, autour de la deuxième unité de séparation 20. Un élément 21 barrière aux poussières, appartenant à la deuxième unité de séparation 20 sépare le réservoir R8 du compartiment de collecte CC.

Lorsque de l'eau est présente dans le flux d'air F admis, les gouttelettes sales récupérées dans le réservoir R8 tombent contre la paroi de fond 2a ou autre paroi délimitant un fond du réservoir R8. Comme bien visible sur la figure 1, le fond du réservoir R8 peut former une pente. Optionnellement le fond est conique/tronconique ou partiellement conique pour former une telle pente descendante vers une position centrale correspondant au compartiment de collecte CC ou à un accès à celui-ci. Ici, la pente est formée à la manière d'un entonnoir mais de préférence avec une pente douce. L'inclinaison peut se poursuivre du côté interne à l'élément barrière 21 et/ou on forme un point bas PB central de l'étage inférieur 8 qui peut se situer sous le niveau d'une extrémité inférieure de l'élément barrière 21.

Autrement dit, dans l'étage inférieur 8, la filtration peut être réalisée de façon passive, la gravité permettant à elle seule de faire circuler les gouttelettes d'eau du réservoir R8 périphérique vers le compartiment de collecte CC. La pente facilite l'écoulement de gouttelettes d'eau de la zone sale vers la zone propre. Typiquement, le compartiment de collecte CC dispose d'un orifice de purge 22 situé dans un point bas de ce fond. L'orifice de purge 22 peut optionnellement comporter une pluralité d'ouvertures 24 dans un capuchon inférieur 28 de la deuxième unité de séparation 20

Il est également prévu un premier clapet d'obturation C1, mobile entre une position de fermeture de l'orifice de purge 22 et une position d'ouverture de l'orifice de purge 22. Ce premier clapet C1 peut être optionnellement fermé lorsque le poids de l'eau filtrée W reste inférieur à un seuil. Le premier clapet C1 peut optionnellement être contrôlé par une unité de commande.

On comprend que l'utilisation de soupapes 41, 42 avec un clapet flexible C1, respectivement C2 est une solution simple de conception. Bien que les figures montrent deux clapets C1, C2 passifs, des commandes à électro-aimant, des vannes actives d'un autre type peuvent être utilisées. Plus généralement, on peut prévoit tout type de moyens d'évacuation 41, 42 pour évacuer l'eau et empêcher que cette eau reste piégée dans le boîtier 2.

L'élément barrière 21 peut comporter ou consister en un média de filtration tubulaire, monté sur une structure de rigidification 27. L'élément barrière 21 est ici perméable à l'eau et entoure ou délimite intérieurement un volume interne central V2 de l'étage inférieur 8. Ce volume interne central V2 peut former tout ou partie du compartiment de collecte CC de l'eau propre/filtrée W.

Le volume interne central V2 peut optionnellement communiquer avec l'espace intérieur creux 6c via l'ouverture O2 dans le flasque inférieur 51 et un passage traversant la base B et pouvant être délimité par le tube inférieur 43. Ce type de passage peut permettre de faire tomber des gouttelettes d'eau récupérées dans la zone d'aval Z2, ces gouttelettes pouvant par exemple être formées par coalescence pendant la traversée du média filtrant 6 de la première unité de séparation 10. Le passage est de préférence obstrué tant que de l'air est filtré activement (via une différence de pression) dans la première unité de séparation. Le clapet C2 de la soupape 42 permet par exemple cette obturation, ici en fermant des ouvertures 24' formées dans un élément de fond situé sous l'espace intérieur creux 6c.

Plus généralement, on comprend que le dispositif de filtration 1 peut disposer d'un système d'évacuation d'eau adapté pour faire circuler l'eau W sélectivement depuis la zone d'aval Z2 vers le compartiment de collecte CC et/ou pour évacuer à l'extérieur du dispositif 1 l'eau séparée W accumulée dans le compartiment de collecte CC.

Un élément de filtration additionnel 26 peut compléter l'élément barrière 21 tubulaire, par exemple en étant placé au fond du compartiment de collecte CC. Un tel élément de filtration additionnel 26 permet de relâcher de l'eau très propre. Du feutre peut être utilisé pour la filtration de l'eau W, dans l'élément barrière 21 et/ou dans l'élément de filtration additionnel.

Une configuration avec un ou plusieurs clapets C1, C2, permet d'évacuer l'eau W vers le bas selon la direction de la gravité, sans source d'énergie. Le ou les clapets C1, C2 pour l'écoulement de l'eau sont formés séparément de la sortie 4 pour l'évacuation d'air purifié, de préférence dans des extrémités inférieures respectives de la première unité de séparation 10 et de la deuxième unité de séparation 20. Ces extrémités sont formées par les soupapes 41, 42.

Dans l'exemple non limitatif de la figure 6, un deuxième clapet C2, placé au-dessus du premier clapet C1, est maintenu fermé lorsqu'il existe une dépression dans le boîtier dans la zone d'aval Z2. A l'arrêt du circuit d'alimentation du dispositif 1, ce deuxième clapet C2 se déforme élastiquement vers sa conformation/configuration par défaut pour obturer le passage traversant. Le siège du deuxième clapet C2 peut être formée par une pièce SC2 séparée du flasque inférieur 51 qui vient se monter intérieurement contre une face supérieure du flasque inférieur 51. Le composant longitudinal T peut s'étendre entre les deux flasques 51, 52 en butant axialement contre une collerette de cette pièce SC2. Les ouvertures 24' sont formées dans cette pièce SC2, par exemple autour d'un passage central à travers lequel est monté un organe axial d'ancrage du clapet C2.

Concernant les particules et poussières, celles-ci sont retenues du côté extérieur par l'élément barrière 21. De plus, pour limiter ou éviter le risque d'encrassement de l'élément barrière 21, on peut éloigner les poussières radialement vers l'extérieur par l'utilisation d'organes magnétiques M tels que des aimants. Ainsi, l'élément barrière 21 de la deuxième unité de séparation 20 peut être entouré d'un ou plusieurs organes magnétiques M qui sont adaptés pour attirer des poussières et des particules. La face interne FM des organes magnétiques M, concave, peut s'étendre par exemple à une distance (éventuellement constante) supérieure à au moins 15 ou 20 mm de la face externe de l'élément barrière 21.

Des aimants permanents, par exemple agencés sous la forme d'un anneau externe, améliorent la retenue sous le chapeau de retenue 30, à un niveau de hauteur plus bas que l'entrée 3 et, de préférence, plus bas que la première unité de séparation 10.

En référence aux figures 1 et 5, les organes magnétiques M sont placés au fond du volume intérieur V du boîtier 2, à distance axiale du chapeau de retenue 3. Le chapeau de retenue 30 coiffe ici la deuxième unité de séparation 20 et forme une interface entre l'étage inférieur 8 et la partie annulaire (première sous-zone) de la zone d'amont Z1 entourant la première unité de séparation 10.

Ce chapeau de retenue 30 peut être accolé ou adjacent à la paroi latérale 2b, au niveau d'un bord annulaire externe 35 distal par rapport à un axe central X du média filtrant 6. Le chapeau de retenue 30 peut présenter une portion annulaire formant un élément de guidage supérieur afin de guider radialement vers l'intérieur les particules et poussières tombant depuis la partie de la zone d'amont Z1 entourant la première unité de séparation 10. Le bord annulaire externe 35 peut être proche ou en prise avec la paroi externe latérale 2b.

Le chapeau de retenue 30 forme aussi un élément de guidage inférieur (situé plus bas que le premier élément de guidage), avec un profil de pente descendante, permettant de guider radialement vers l'extérieur les particules et poussières ayant été guidées par l'élément de guidage supérieur, en passant par une ouverture ou une première série d'ouvertures latérales 36 proches de la paroi latérale 2b.

Le chapeau de retenue 30 est par exemple maintenu en position, au-dessus de la deuxième unité de séparation 20, par une partie centrale 32 délimitant une ouverture axiale 33 et adaptée pour s'engager dans ou autour du tube inférieur 43. Un contact annulaire d'étanchéité, optionnellement à l'aide d'un bourrelet annulaire, peut permettre de rendre étanche la connexion entre le tube inférieur 43 et la partie centrale 32, également de forme tubulaire.

Le chapeau de retenue 30 présente optionnellement une jupe J3, parallèle et concentrique autour de la partie centrale 32, qui peut être fixée à une extrémité supérieure annulaire de la deuxième unité de séparation 20. Cette jupe J3 s'appuie optionnellement par l'extérieur contre l'élément barrière 21, par un contact annulaire radial.

L'élément de guidage inférieur peut être sous la forme d'une portion radiale 31, de préférence tronconique, qui s'étend de façon intermédiaire entre la partie centrale 32 et le bord annulaire externe 35. La portion radiale 31 peut optionnellement être ajourée avec des ouvertures axiales 37 proches d'un bord inférieur annulaire 39 de la pièce formant le chapeau de retenue 30 (ouvertures 37 éloignées de la pièce centrale 32). Des bras de liaison 34 longitudinaux, sensiblement parallèles entre eux par exemple, peuvent relier, depuis le bord inférieur annulaire 39, l'élément de guidage inférieur à l'élément de guidage supérieur. Les espaces entre les bras de liaison forment lesdites ouvertures latérales 36.

Des exemples d'agencement, avec au moins une partie remplaçable ou cartouche remplaçable, vont être maintenant exposés en référence aux figures 1, 4 et 6.

Le dispositif de filtration 1 montré sur la figure 1 permet un dévissage du couvercle 2c. Selon une option, il est ainsi permis d'extraire au moins l'élément de cloisonnement 9 et la première unité de séparation 10. Un opérateur peut ainsi changer sélectivement la première unité de séparation 10.

Dans une variante, l'étage inférieur 8 peut optionnellement être conçu comme un élément séparable, par exemple en étant associé à un composant de bol qui inclut la paroi de fond 2a et une portion de la paroi latérale 2b qui s'étend sous l'excroissance 25. Dans ce cas, à la différence du bol monobloc illustré sur la figure 4, un opérateur peut sélectivement dévisser ou démonter d'une quelconque manière un composant de bol pour séparer l'étage inférieur 8 et venir remplacer à la fois le composant de bol et la deuxième unité de séparation 20. Un tel système permet de conserver une partie stationnaire formant la partie haute du bol 50 et donc de conserver l'excroissance et les pièces de guidage 54 associées.

Dans l'option illustrée ou dans des options similaires, le boîtier 2 peut être agencé pour permettre l'insertion, d'un bloc, de la totalité des moyens (10, 20, 30) de séparation. Dans ce cas, on comprend que la première unité de séparation 10, le chapeau de retenue 30 ou organe similaire et la deuxième unité de séparation 20 sont interconnectés entre eux, typiquement par superposition, de façon à former une cartouche filtrante 60 se montant d'un bloc dans le volume interne V du boîtier 2. Typiquement, la ou les pièces de guidage 54 (prévues réutilisables ou non) peuvent aussi se retirer avec la cartouche 60. Dans ce cas, on peut prévoir une conception amovible de la partie (FG, 53) qui complète la paroi externe de boîtier pour former la gorge G, éventuellement en la rendant solidaire de l'élément de cloisonnement 9.

En référence à la figure 6, la cartouche filtrante 60 peut former un bloc séparé d'un panier extractible ou autre type d'enveloppe à laquelle sont solidarisés les aimants ou organes magnétiques M similaires. Une conception sous forme de panier avec des aimants fixés de manière amovible au panier peut permettre une récupération aisée du réservoir R8 (rempli de particules/poussières) à jeter et une réutilisation des aimants dans la nouvelle cartouche de remplacement.

En référence à présent à la figure 7, on peut voir que le boîtier 2 peut se fixer à une jambe 91 d'un amortisseur de suspension 90. Les organes de fixation 92 peuvent être répartis dans une ou plusieurs zones de fixation. L'axe du filtre (et l'axe longitudinal X du média filtrant 6) sont sensiblement verticaux, pour profiter de l'effet gravitaire. Le boîtier 2 peut être placé entièrement au-dessus ou partiellement au-dessus de l'axe Y de rotation du disque rotor D (disque de frein). Il reste un accès suffisant, le long d'un ressort de l'amortisseur 90 par exemple, pour pouvoir retirer le couvercle 2c et réaliser une rechange si besoin sans retirer la totalité du bol 50 (sans démonter au niveau des organes de fixation 92). Alternativement, un opérateur peut démonter le filtre en entier puis effectuer une rechange de tout ou partie du dispositif 1 avant de fixer à nouveau le filtre à son support sur l'engin/véhicule.

Le dispositif, couplé à un système d'aspiration, peut éviter l'encrassement rapide des jantes par des résidus de freinage et rend l'ensemble de frein 7 non polluant par rapport aux systèmes de freinage classiques sans dispositif de récupération et traitement des poussières.

Il doit être évident pour les personnes versées dans l'art que la présente invention permet des modes de réalisation sous de nombreuses autres formes spécifiques sans l'éloigner du domaine d'application de l'invention comme revendiqué. Ainsi, le bol 50 et le couvercle 2c sensiblement en forme de cloche peuvent être conçus et/ou assemblés entre eux différemment. L'assemblage de ces éléments peut être réalisé en utilisant tout mode de fixation approprié, le vissage correspondant à une option préférée (mais non limitative) pour rendre l'assemblage du dispositif 1 particulièrement simple et robuste. De plus, le couvercle 2c peut être formé par une paroi appartenant à un composant fonctionnel, par exemple une turbine ou autre moyen pour aspirer de l'air propre et formant la sortie 4.

Par ailleurs, il doit être compris que les options d'agencement d'unités respectives de séparation 10, 20 ou autre d'éléments complémentaires sont utilisables de façon indépendante de la structure complète retenue pour le dispositif dans son ensemble. Ainsi, les particularités et structures décrites en détail pour filtrer l'eau peuvent être considérées comme de simples options pour compléter l'enseignement d'une filtration d'air en permettant de faire tomber des poussières les plus lourdes dans un étage inférieur 8, de même que les particularités et structures décrites en détail pour guider et filtrer l'air de façon centripète peuvent être considérées comme une option non limitative de filtration d'air dans un filtre combinant un média de filtration d'air et une deuxième unité de séparation 20 dans un étage inférieur 8.

## Revendications

1. Dispositif (1) de filtration, le dispositif (1) comprenant :
- un boîtier (2) présentant une entrée (3) pour l'admission d'un flux d'air (F) et une sortie (4) pour l'évacuation d'air purifié (PA), et
- des moyens (10, 20, 30) de séparation pour retenir les particules et les poussières, les moyens de séparation comprenant :
- une première unité de séparation (10), logée dans le boîtier (2) et permettant de séparer des particules et des poussières, la première unité de séparation comprenant un élément filtrant (5) pourvu d'un média filtrant (6) et délimitant une zone d'amont (Z1) en communication avec l'entrée (3) et une zone d'aval (Z2) en communication avec la sortie (4), la zone d'amont (Z1) communiquant en outre avec un étage inférieur (8) situé plus bas que la première unité de séparation (10), l'air admis via l'entrée (3) circulant au travers du média filtrant (6) pour atteindre la zone d'aval (Z2), de préférence selon un sens de filtration centripète,
- une deuxième unité de séparation (20), située dans l'étage inférieur (8) et adaptée pour filtrer de l'eau par retenue de particules, de préférence par filtration centripète,
**caractérisé en ce que** le dispositif (1) de filtration est un dispositif de filtration de particules et poussières de freinage, destiné à collecter des particules et poussières produites par un ou des patins d'un ensemble de frein, de sorte que l'entrée (3) est une entrée pour l'admission d'un flux d'air (F) chargé en particules et poussières de freinage,
la deuxième unité de séparation (20) permettant de séparer l'eau (W) par rapport aux particules et poussières tombées depuis la zone d'amont (Z1).

2. Dispositif de filtration selon la revendication 1, comprenant :
- un compartiment (CC) de collecte de l'eau séparée (W), situé dans l'étage inférieur (8) ;
- des moyens d'évacuation d'eau (41, 42) adaptés pour faire circuler l'eau (W) sélectivement depuis la zone d'aval (Z2) vers le compartiment de collecte (CC) et/ou pour évacuer à l'extérieur du dispositif (1) l'eau séparée accumulée dans le compartiment de collecte (CC).

3. Dispositif de filtration selon la revendication 2, dans lequel les moyens d'évacuation d'eau (41 ; 42) sont :
- adaptés pour évacuer l'eau (W) vers le bas, c'est-à-dire selon la direction de la gravité, et
- formés séparément de la sortie (4) pour l'évacuation d'air purifié (PA).

4. Dispositif de filtration la revendication 2 ou 3, dans lequel la deuxième unité de séparation (20) comprend le compartiment de collecte (CC), l'étage inférieur (8) formant en outre un réservoir (R8) pour piéger des poussières qui est séparé dudit compartiment de collecte par un élément (21) barrière aux poussières.

5. Dispositif de filtration selon la revendication 4, dans lequel l'élément barrière (21) est annulaire et délimite intérieurement un volume interne central (V2) de l'étage inférieur (8), les moyens d'évacuation d'eau (41, 42) comprenant :
- un orifice de purge (22) pour vider le compartiment de collecte (CC), et
- -un premier clapet d'obturation (C1), mobile entre une position de fermeture de l'orifice de purge (22) et une position d'ouverture de l'orifice de purge (22).

6. Dispositif de filtration selon la revendication 5, dans lequel les moyens d'évacuation d'eau (41, 42) comprennent un deuxième clapet (C2), apte à faire communiquer entre eux la zone d'aval (Z2) et le volume interne central (V2), dans une configuration d'ouverture du deuxième clapet (C2).

7. Dispositif de filtration selon l'une quelconque des revendications précédentes, dans lequel les moyens (10, 20, 30) de séparation sont interconnectés entre eux en superposant la première unité de séparation (10) à la deuxième unité de séparation (20), de façon à former une cartouche filtrante (60) se montant d'un bloc dans le volume interne (V) du boîtier (2),
et dans lequel l'entrée (3) débouche intérieurement dans une région de la zone d'amont (Z1) située ou délimitée axialement entre un flasque inférieur (51) et un flasque supérieur (52), qui sont des flasques (51, 52) appartenant à l'élément filtrant qui inclut également un composant longitudinal (T) interne qui s'étend entre le flasque inférieur (51) et le flasque supérieur (52), le média filtrant (6) s'étendant de façon annulaire autour du composant longitudinal (T), autour d'un axe central (X) du média filtrant (6) et entre le flasque inférieur (51) et le flasque supérieur (52).

8. Dispositif de filtration selon la revendication 7, dans lequel, la cartouche filtrante (60) présente en outre un chapeau de retenue (30) coiffant la deuxième unité de séparation (20) et comportant :
- au moins un premier élément de guidage dit supérieur, formant de préférence un bord externe généralement annulaire (35) du chapeau de retenue (30), pour guider radialement vers l'intérieur les particules et poussières tombant depuis la partie de la zone d'amont (Z1) entourant la première unité de séparation (20),
- au moins un deuxième élément de guidage (31) dit inférieur, formant de préférence une pente descendante, pour guider radialement vers l'extérieur les particules et poussières ayant été guidées par l'au moins un premier élément de guidage.

9. Dispositif de filtration selon l'une quelconque des revendications précédentes, dans lequel le média filtrant (6) de la première unité de séparation (10) est adapté pour retenir des poussières légères, en particulier peu ou pas chargées en métal, la première unité de séparation (10) comprenant en outre :
- un organe pré-séparateur (40), situé dans la zone d'amont (Z1) et entourant le média filtrant (6), formant un déflecteur annulaire (45) ajouré ou perforé pour être perméable aux poussières légères, la face externe du déflecteur annulaire (45) étant adaptée pour guider vers l'étage inférieur (8) des matières lourdes moins volatiles que les poussières légères, en particulier des poussières lourdes chargées en métal et des gouttelettes liquides.

10. Dispositif de filtration selon l'une quelconque des revendications précédentes, dans lequel la deuxième unité de séparation (20) comprend ou est entouré d'un ou plusieurs organes magnétiques (M) qui sont adaptés pour attirer des poussières et des particules afin de les retenir plus bas que l'entrée (3) et, de préférence, plus bas que la première unité de séparation (10).

11. Dispositif de filtration selon l'une quelconque des revendications précédentes, dans lequel les moyens (10, 20, 30) de séparation comprennent un chapeau de retenue (30) coiffant la deuxième unité de séparation (20) et formant une interface entre l'étage inférieur (8) et une partie annulaire de la zone d'amont (Z1) entourant la première unité de séparation (10), le chapeau de retenue (30) présentant :
- un bord annulaire externe (35) distal par rapport à un axe central (X) du média filtrant (6), le bord annulaire externe (35) étant de préférence proche ou en prise avec une paroi externe latérale (2b) du boîtier (2), et
- une partie centrale (32) délimitant une ouverture axiale (33) et adaptée pour se fixer à au moins l'un parmi la première unité de séparation (10) et la deuxième unité de séparation (20).

12. Dispositif de filtration selon la revendication 11, dans lequel le chapeau de retenue (30) présente une portion radiale (31), de préférence tronconique, qui s'étend de façon intermédiaire entre le bord annulaire externe (35) et la partie centrale (32), un réservoir (R8) pour piéger des particules et des poussières de freinage étant délimité dans l'étage inférieur (8) entre le chapeau de retenue (30) et une paroi de fond (2a) du boîtier (2), préférentiellement inclinée vers un point bas (PB) central de l'étage inférieur (8).

13. Dispositif de filtration selon la revendication 10 seule ou combinée à la revendication 11 ou 12, dans lequel le ou les organes magnétiques (M) sont adjacents à une paroi de fond (2a) du boîtier et/ou accolés à une paroi latérale (2b) du boîtier délimitant un volume interne (V) du boîtier dans lequel sont entièrement logés les moyens (10, 20, 30) de séparation.

14. Ensemble de frein (7) non polluant comprenant :
- le dispositif de filtration (1) selon l'une quelconque des revendications précédentes,
- un support d'étrier (71),
- un disque rotor (D) tournant autour d'un axe (Y),
- au moins deux patins mobiles (72a, 72b) destinés à venir en appui sur le disque rotor (D) pour le freiner sous une force de serrage fournie par un étrier, les patins (72a, 72b) comprenant du matériau de friction susceptible de relâcher des particules résultant de l'abrasion,
- un dispositif collecteur (100) agencé au moins en partie à proximité du support d'étrier (71), le dispositif collecteur (100) comprenant :
- au moins une entrée, et
- un élément de liaison (13), raccordé à une sortie du dispositif collecteur et en communication avec l'entrée du dispositif de filtration (1).

15. Ensemble de frein selon la revendication 14, dans lequel le dispositif collecteur (100) présente des moyens d'aspiration agencés au moins en partie à proximité du support d'étrier (71), de façon à ce que chaque entrée du dispositif collecteur soit définie par une zone d'aspiration formée au voisinage de chaque patin (72a, 72b) et délimitée par un déflecteur.

16. Utilisation du dispositif de filtration (1) selon l'une quelconque des revendications 1 à 13 dans un véhicule ou engin roulant, **caractérisée en ce que** l'entrée (3) formée par le boîtier (2) définit une canule (C3) sur laquelle est fixé un élément de liaison (13), de préférence un tuyau souple, pour la liaison à un dispositif (100) collecteur de poussières de freinage, le boîtier (2) étant attaché par des moyens de fixation (92) à une jambe (91) d'un amortisseur de suspension (90).

17. Utilisation du dispositif de filtration (1) selon l'une quelconque des revendications 1 à 13 dans un véhicule ou engin roulant, **caractérisée en ce que** l'étage inférieur (8) du dispositif de filtration (1) sert à conserver des particules et des poussières de freinage autour de la deuxième unité de séparation (20) et sous un chapeau de retenue (30) inséré dans le boîtier (2).

18. Utilisation du dispositif de filtration (1) selon l'une quelconque des revendications 1 à 13 dans un véhicule ou engin roulant générant des particules et des poussières de freinage, **caractérisée en ce qu'**un ou plusieurs organes magnétiques (M) sont prévus dans l'étage inférieur (8) pour attirer et conserver des particules et des poussières de freinage dans l'étage inférieur (8).

## Patentansprüche

1. Vorrichtung (1) zum Filtern, wobei die Vorrichtung (1) umfasst:
- ein Gehäuse (2) mit einem Einlass (3) für den Einlass eines Luftstroms (F) und einem Auslass (4) für die Abgabe von gereinigter Luft (PA), und
- Trennmittel (10, 20, 30) zum Zurückhalten von Partikeln und Staub, wobei die Trennmittel umfassen:
- eine erste Trenneinheit (10), die in dem Gehäuse (2) aufgenommen ist, um Partikel und Staub zu trennen, wobei die erste Trenneinheit ein Filterelement (5) umfasst, das mit einem Filtermedium (6) versehen ist und einen stromaufwärts gelegenen Bereich (Z1) in Verbindung mit dem Einlass (3) und einen stromabwärts gelegenen Bereich (Z2) in Verbindung mit dem Auslass (4) begrenzt, wobei der stromaufwärts gelegene Bereich (Z1) ferner mit einer unteren Stufe (8) in Verbindung steht, die tiefer angeordnet ist als die erste Trenneinheit (10), wobei die über den Einlass (3) eingelassene Luft durch das Filtermedium (6) strömt, um den stromabwärts gelegenen Bereich (Z2) zu erreichen, bevorzugt in einer zentripetalen Filtrationsrichtung,
- eine zweite Trenneinheit (20), die in der untersten Stufe (8) angeordnet ist und zum Filtern von Wasser durch Zurückhalten von Partikeln, bevorzugt durch zentripetale Filtration, ausgebildet ist,
**dadurch gekennzeichnet, dass** die Filtervorrichtung (1) eine Filtervorrichtung für Bremsstaub und -partikel ist, die dazu bestimmt ist, Partikel und Staub zu sammeln, die von einem oder mehreren Bremsklötzen einer Bremsbaugruppe erzeugt werden, so dass der Einlass (3) ein Einlass für die Aufnahme eines Luftstroms (F) ist, der mit Bremsstaub und -partikeln beladen ist,
wobei die zweite Trenneinheit (20) das Wasser (W) von den Partikeln und dem Staub trennen kann, die aus dem stromaufwärts gelegenen Bereich (Z1) gefallen sind.

2. Filtervorrichtung nach Anspruch 1, umfassend:
- ein Abteil (CC) zum Sammeln des abgetrennten Wassers (W), die in der unteren Stufe (8) angeordnet ist;
- Wasserabflussmittel (41, 42), die dazu ausgebildet sind, das Wasser (W) selektiv von dem stromabwärts gelegenen Bereich (Z2) zum Sammelabteil (CC) zu leiten und/oder das im Sammelabteil (CC) gesammelte abgetrennte Wasser aus der Vorrichtung (1) herauszuleiten.

3. Filtervorrichtung nach Anspruch 2, wobei die Wasserabflussmittel (41; 42):
- dazu ausgebildet sind, das Wasser (W) nach unten, d. h. in Richtung der Schwerkraft, abzuleiten; und
- getrennt vom Auslass (4) für die Ableitung von gereinigter Luft (PA) gebildet sind.

4. Filtervorrichtung nach Anspruch 2 oder 3, wobei die zweite Trenneinheit (20) das Sammelabteil (CC) umfasst, wobei die untere Etage (8) ferner einen Behälter (R8) zum Auffangen von Staub bildet, der durch ein Staubsperrelement (21) von dem Sammelabteil getrennt ist.

5. Filtervorrichtung nach Anspruch 4, wobei das Sperrelement (21) ringförmig ist und ein zentrales Innenvolumen (V2) der unteren Stufe (8) innen begrenzt, wobei die Wasserabflussmittel (41, 42) umfassen:
- eine Ablassöffnung (22) zum Entleeren des Sammelabteils (CC), und
- ein erstes Verschlussventil (C1), das zwischen einer Position zum Schließen der Ablassöffnung (22) und einer Position zum Öffnen der Ablassöffnung (22) beweglich ist.

6. Filtervorrichtung nach Anspruch 5, wobei die Wasserabflussmittel (41, 42) ein zweites Ventil (C2) umfassen, das dazu geeignet ist, den stromabwärts gelegenen Bereich (Z2) und das zentrale Innenvolumen (V2) in einer Öffnungskonfiguration des zweiten Ventils (C2) miteinander in Verbindung zu bringen.

7. Filtervorrichtung nach einem der vorhergehenden Ansprüche, wobei die Trennmittel (10, 20, 30) miteinander verbunden sind, indem die erste Trenneinheit (10) mit der zweiten Trenneinheit (20) überlagert wird, um eine Filterpatrone (60) zu bilden, die einstückig in dem Innenvolumen (V) des Gehäuses (2) befestigt ist, und wobei der Einlass (3) innen in einem stromaufwärts gelegenen Teils des Bereichs (Z1) mündet, der axial zwischen einem unteren Flansch (51) und einem oberen Flansch (52) angeordnet oder begrenzt ist, wobei diese Flansche (51, (52) zu dem Filterelement gehören, das auch eine innere Längskomponente (T) umfasst, die sich zwischen dem unteren Flansch (51) und dem oberen Flansch (52) erstreckt, wobei sich das Filtermedium (6) ringförmig um die Längskomponente (T), um eine Mittelachse (X) des Filtermediums (6) und zwischen dem unteren Flansch (51) und dem oberen Flansch (52) erstreckt.

8. Filtervorrichtung nach Anspruch 7, wobei die Filterpatrone (60) ferner eine Haltekappe (30) aufweist, die die zweite Trenneinheit (20) abdeckt und Folgendes umfasst:
- wenigstens ein erstes, sogenanntes oberes Führungselement, das bevorzugt einen allgemein ringförmigen Außenrand (35) der Haltekappe (30) bildet, um die Partikel und Staub, die von dem die erste Trenneinheit (20) umgebenden Teil des stromaufwärts gelegenen Bereichs (Z1) fallen, radial nach innen zu führen,
- wenigstens ein zweites, sogenanntes unteres Leitelement (31), das bevorzugt eine abfallende Schräge bildet, um Partikel und Staub, die von dem wenigstens einen ersten Leitelement geleitet wurden, radial nach außen zu leiten.

9. Filtervorrichtung nach einem der vorhergehenden Ansprüche, wobei das Filtermedium (6) der ersten Trenneinheit (10) dazu ausgebildet ist, leichten Staub, insbesondere mit geringem oder keinem Metallgehalt, zurückzuhalten, wobei die erste Trenneinheit (10) ferner umfasst:
- ein vorab trennendes Element (40), das in dem stromaufwärts gelegenen Bereich (Z1) angeordnet ist und das Filtermedium (6) umgibt und einen ringförmigen Deflektor (45) bildet, der dazu geformt oder perforiert ist, für leichten Staub durchlässig zu sein, wobei die Außenseite des ringförmigen Deflektors (45) dazu ausgebildet ist, schwerere weniger flüchtige Stoffe als leichten Staub, insbesondere schweren metallhaltigen Staub und Flüssigkeitströpfchen, in die untere Stufe (8) zu leiten.

10. Filtervorrichtung nach einem der vorhergehenden Ansprüche, wobei die zweite Trenneinheit (20) ein oder mehrere magnetische Elemente (M) umfasst oder von diesen umgeben ist, die dazu ausgebildet sind, Staub und Partikel anzuziehen, um sie unterhalb des Einlasses (3) und bevorzugt weiter unterhalb der ersten Trenneinheit (10) zurückzuhalten.

11. Filtervorrichtung nach einem der vorhergehenden Ansprüche, wobei die Trennmittel (10, 20, 30) eine Haltekappe (30) umfassen, die die zweite Trenneinheit (20) abdeckt und eine Schnittstelle zwischen der unteren Stufe (8) und einem ringförmigen Teil des die erste Trenneinheit (10) umgebenden stromaufwärts gelegenen Bereichs (Z1) bildet, wobei die Haltekappe (30) aufweist:
- einen äußeren ringförmigen Rand (35), der zu einer Mittelachse (X) des Filtermediums (6) distal ist, wobei der äußere ringförmige Rand (35) bevorzugt nahe an oder in Eingriff mit einer seitlichen Außenwand (2b) des Gehäuses (2) ist, und
- einen Mittelteil (32), der eine axiale Öffnung (33) begrenzt und derart ausgebildet ist, dass er an wenigstens einer der ersten Trenneinheit (10) und der zweiten Trenneinheit (20) befestigt werden kann.

12. Filtervorrichtung nach Anspruch 11, wobei die Haltekappe (30) einen radialen, bevorzugt kegelstumpfförmigen Abschnitt (31) aufweist, der sich zwischen dem äußeren ringförmigen Rand (35) und dem Mittelteil (32) erstreckt, einen Behälter (R8) zum Auffangen von Partikeln und Bremsstaub, der in der unteren Stufe (8) zwischen der Haltekappe (30) und einer Bodenwand (2a) des Gehäuses (2) begrenzt ist, die bevorzugt zu einem zentralen Tiefpunkt (PB) der unteren Stufe (8) hin geneigt ist.

13. Filteranordnung nach Anspruch 10, allein oder in Verbindung mit Anspruch 11 oder 12, wobei das oder die magnetischen Elemente (M) an eine Bodenwand (2a) des Gehäuses und/oder an eine Seitenwand (2b) des Gehäuses angrenzen, die ein Innenvolumen (V) des Gehäuses begrenzen, in dem die Trennmittel (10, 20, 30) vollständig aufgenommen sind.

14. Umweltfreundliche Bremsanordnung (7), welche Folgendes umfasst:
- die Filtervorrichtung (1) nach einem der vorhergehenden Ansprüche,
- einen Bremssattelträger (71),
- eine Rotorscheibe (D), die sich um eine Achse (Y) dreht,
- wenigstens zwei bewegliche Bremsklötze (72a, 72b), die dazu bestimmt sind, an der Rotorscheibe (D) anzuliegen, um sie unter einer von einem Bremsmittel gelieferten Klemmkraft zu bremsen, wobei die Bremsklötze (72a, 72b) Reibungsmaterial umfassen, das durch Abrieb entstandene Partikel freisetzen kann,
- eine Sammelvorrichtung (100), die wenigstens teilweise in der Nähe des Bremssattelträgers (71) angeordnet ist, wobei die Sammelvorrichtung (100) Folgendes umfasst:
- wenigstens einen Einlass, und
- ein Verbindungselement (13), das mit einem Auslass der Sammelvorrichtung verbunden ist und mit dem Einlass der Filtervorrichtung (1) in Verbindung steht.

15. Bremsanordnung nach Anspruch 14, wobei die Sammelvorrichtung (100) Ansaugmittel aufweist, die wenigstens teilweise in der Nähe des Bremssattelträgers (71) angeordnet sind, so dass jeder Einlass der Sammelvorrichtung durch einen Ansaugbereich definiert ist, der in der Nähe jedes Bremsklotzes (72a, 72b) gebildet und durch einen Deflektor begrenzt ist.

16. Verwendung der Filtervorrichtung (1) nach einem der Ansprüche 1 bis 13 in einem Fahrzeug oder einer rollenden Maschine, **dadurch gekennzeichnet, dass** der durch das Gehäuse (2) gebildete Einlass (3) eine Kanüle (C3) begrenzt, an der ein Verbindungselement (13) befestigt ist, bevorzugt ein elastisches Rohr, zur Verbindung mit einer Vorrichtung (100) zum Sammeln von Bremsstaub, wobei das Gehäuse (2) durch Befestigungsmittel (92) an einem Bein (91) eines Aufhängungsdämpfers (90) befestigt ist.

17. Verwendung der Filtervorrichtung (1) nach einem der Ansprüche 1 bis 13 in einem Fahrzeug oder einer rollenden Maschine, **dadurch gekennzeichnet, dass** die untere Stufe (8) der Filtervorrichtung (1) dazu dient, Partikel und Bremsstaub um die zweite Trenneinheit (20) und unter einer in das Gehäuse (2) eingesetzten Haltekappe (30) zu halten.

18. Verwendung der Filtervorrichtung (1) nach einem der Ansprüche 1 bis 13 in einem Fahrzeug oder einer rollenden Maschine, die Partikel und Bremsstaub erzeugt, **dadurch gekennzeichnet, dass** ein oder mehrere magnetische Elemente (M) in der unteren Stufe (8) vorgesehen sind, um Partikel und Bremsstaub anzuziehen und in der unteren Stufe (8) zu halten.

## Claims

1. Filtration device (1), the device (1) comprising:
- a housing (2) having an inlet (3) for the intake of an air flow (F) and an outlet (4) for the discharge of purified air (PA), and
- separation means (10, 20, 30) for retaining the dust and particles,
the separation means comprising:
- a first separation unit (10), housed in the housing (2) and enabling the separation of dust and particles, the first separation unit comprising a filtering element (5) provided with a filter medium (6) and defining an upstream zone (Z1) in communication with the inlet (3) and a downstream zone (Z2) in communication with the outlet (4), the upstream zone (Z1) also being in communication with a lower stage (8) located lower than the first separation unit (10), the air which enters via the inlet (3) circulating through the filter medium (6) to reach the downstream zone (Z2), preferably in a centripetal direction of filtration,
- a second separation unit (20), located in the lower stage (8), and suitable for filtering water by retaining dust and particles, preferably by centripetal filtration,
**characterized in that** the filtration device is a device for filtering brake dust and particles, intended to collect dust and particles produced by one or more pads of a brake assembly, so that the inlet (3) is an inlet for the intake of an air flow (F) loaded with brake dust and particles,
the second separation unit (20) enabling the separation of water (W) from the dust and particles that have fallen from the upstream zone (Z1).

2. Filtration device according to claim 1, comprising:
- a collection compartment (CC) for the separated water (W), located in the lower stage (8);
- water discharge means (41, 42) suitable for causing the water (W) to flow selectively from the downstream zone (Z2) to the collection compartment (CC) and/or to discharge outside the device (1) the separated water collected in the collection compartment (CC).

3. Filtration device according to claim 2, wherein the water discharge means (41; 42) are:
- suitable for discharging the water (W) downwards, in other words in the direction of gravity, and
- formed separately from the outlet (4) for discharging purified air (PA).

4. Filtration device according to claim 2 or 3, wherein the second separation unit (20) comprises the collection compartment (CC), the lower stage (8) further forming a tank (R8) for trapping dust which is separated from said collection compartment by a dust barrier element (21).

5. Filtration device according to claim 4, wherein the barrier element (21) is annular and internally defines a central internal volume (V2) of the lower stage (8), the water discharge means (41, 42) comprising:
- a purge port (22) for emptying the collection compartment (CC), and
- a first closure member (C1), movable between a position that closes the purge port (22) and a position that opens the purge port (22).

6. Filtration device according to claim 5, wherein the water discharge means (41, 42) comprise a second closure member (C2), able to place the downstream zone (Z2) and the central internal volume (V2) in communication, in an open configuration of the second closure member (C2).

7. Filtration device according to any one of the preceding claims, wherein the separation means (10, 20, 30) are interconnected by superimposing the first separation unit (10) on the second separation unit (20), so as to form a filter cartridge (60) mounted as one unit within the internal volume (V) of the housing (2),
and wherein the inlet (3) opens internally into a region of the upstream zone located or delimited axially between a lower flange (51) and an upper flange (52), which are flanges (51, 52) belonging to the filtering element that also includes an internal longitudinal component (T) extending between the lower flange (51) and the upper flange (52), the filter medium (6) extending annularly around the internal longitudinal component (T), around a central axis (X) of the filter medium (6) and between the lower flange (51) and the upper flange (52).

8. Filtration device according to claim 7, wherein the filter cartridge (60) is further provided with a retaining cap (30) capping the second separation unit (20) and comprising:
- at least one first guide element, called the upper guide element, preferably forming a generally annular outer edge (35) of the retaining cap (30), for guiding radially inward the dust and particles falling from the portion of the upstream zone (Z1) that surrounds the first separation unit (20),
- at least one second guide element (31), called the lower guide element, preferably forming a downward slope, for guiding radially outward the dust and particles that have been guided by the at least one first guide element.

9. Filtration device according to any one of the preceding claims, wherein the filter medium (6) of the first separation unit (10) is suitable for retaining light dust, in particular loaded with little or no metal, the first separation unit (10) further comprising:
- a pre-separator member (40), located in the upstream zone (Z1) and surrounding the filter medium (6), forming a perforated or openworked annular deflector (45) in order to be permeable to light dust, the outer face of the annular deflector (45) being suitable for guiding towards the lower stage (8) the heavy materials that are less volatile than light dust, in particular heavy dust loaded with metal and liquid droplets.

10. Filtration device according to any one of the preceding claims, wherein the second separation unit (20) comprises or is surrounded by one or more magnetic members (M) which are suitable for attracting dust and particles in order to retain them below the inlet (3), and preferably below the first separation unit (10).

11. Filtration device according to any one of the preceding claims, wherein the separation means (10, 20, 30) comprise a retaining cap (30) capping the second separation unit (20) and forming an interface between the lower stage (8) and an annular portion of the upstream zone (Z1) surrounding the first separation unit (10), the retaining cap (30) having:
- an outer annular edge (35) that is distal to a central axis (X) of the filter medium (6), the outer annular edge (35) preferably being close to or in engagement with an external side wall (2b) of the housing (2), and
- a central portion (32) defining an axial opening (33) and suitable for attachment to at least one among the first separation unit (10) and the second separation unit (20).

12. Filtration device according to claim 11, wherein the retaining cap (30) has a radial portion (31), preferably frustoconical, which extends between the outer annular edge (35) and the central portion (32), a tank (R8) for trapping brake dust and particles being defined in the lower stage (8) between the retaining cap (30) and a bottom wall (2a) of the housing (2), this bottom wall preferably being inclined towards a central low point (PB) of the lower stage (8).

13. Filtration device according to claim 10 alone or in combination with claim 11 or 12, wherein the one or more magnetic members (M) are adjacent to a bottom wall (2a) of the housing and/or contiguous to a side wall (2b) of the housing defining an internal volume (V) of the housing in which the separation means (10, 20, 30) are entirely housed.

14. Non-polluting brake assembly (7) comprising:
- the filtration device (1) according to any one of the preceding claims,
- a caliper bracket (71),
- a rotor disk (D) rotating about an axis (Y),
- at least two movable pads (72a, 72b) intended to press on the rotor disc (D) in order to brake it with a clamping force provided by a bracket, the pads (72a, 72b) comprising friction material capable of releasing particles resulting from abrasion,
- a collector device (100) at least partly arranged close to the caliper bracket (71), the collector device (100) comprising:
- at least one inlet, and
- a connecting element (13), connected to an outlet of the collector device and in communication with the inlet of the filtration device (1).

15. Brake assembly according to claim 14, wherein the collector device (100) has suction means at least partly arranged close to the caliper bracket (71), so that each inlet of the collector device is formed by a suction zone formed in the vicinity of each pad (72a, 72b) and delimited by a deflector.

16. Use of the filtration device (1) according to any one of claims 1 to 13 in a vehicle or rolling stock, wherein the inlet (3) formed by the housing (2) defines a hollow tube (C3) on which is fixed a connecting element (13), preferably a hose, for connection to a brake dust collector device (100), the housing (2) being attached by attachment means (92) to a leg (91) of a suspension shock absorber (90).

17. Use of the filtration device (1) according to any one of claims 1 to 13 in a vehicle or rolling stock, wherein the lower stage (8) of the filtration device (1) serves to keep brake dust and particles around the second separation unit (20) and under a retaining cap (30) inserted into the housing (2).

18. Use of the filtration device (1) according to any one of claims 1 to 13 in a vehicle or rolling stock generating brake dust and particles, wherein one or more magnetic members (M) are provided in the lower stage (8) in order to attract and retain brake dust and particles in the lower stage (8).
